(19) **Europäisches Patentamt / European Patent Office / Office européen des brevets**

(11) **EP 4 664 809 A1**

(12) **EUROPEAN PATENT APPLICATION**
published in accordance with Art. 153(4) EPC

(43) Date of publication:
**17.12.2025 Bulletin 2025/51**

(21) Application number: **24752714.6**

(22) Date of filing: **29.01.2024**

(51) International Patent Classification (IPC):
**H04L 5/00** (2006.01)   **H04B 17/391** (2015.01)
**H04B 7/04** (2017.01)

(52) Cooperative Patent Classification (CPC):
**H04B 7/04; H04B 17/391; H04L 5/00; H04L 41/14**

(86) International application number:
**PCT/CN2024/074373**

(87) International publication number:
**WO 2024/164858 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 CN 202310069113**

(71) Applicant: **Datang Mobile Communications Equipment Co., Ltd.**
**Beijing 100085 (CN)**

(72) Inventors:
• **HUANG, Qiuping**
  **Beijing 100085 (CN)**
• **GAO, Qiubin**
  **Beijing 100085 (CN)**
• **FEI, Yongqiang**
  **Beijing 100085 (CN)**
• **WANG, Da**
  **Beijing 100085 (CN)**

(74) Representative: **Studio Torta S.p.A.**
**Via Viotti, 9**
**10121 Torino (IT)**

(54) **PERFORMANCE EVALUATION METHOD, DEVICE, AND READABLE STORAGE MEDIUM**

(57) Disclosed are a performance evaluation method and apparatus, and a readable storage medium, which relate to the technical field of communications. The method includes: evaluating performance of a target object based on a first CSI and a second CSI, where the target object includes a target model and/or a first method; the target model includes one or more of a first model and a second model; the first method includes a method for determining and/or feeding back CSI; and the first CSI is obtained based on the first model or the second model.

```
        ┌──────────┐
        │  start   │
        └────┬─────┘
             │
             ▼
┌──────────────────────────────────────────────┐
│ evaluating performance of a target object     │──── 101
│ based on a first CSI and a second CSI          │
└────────────────────┬───────────────────────────┘
             │
             ▼
        ┌──────────┐
        │   end    │
        └──────────┘
```

FIG. 1

**Description**

**CROSS-REFERENCE TO RELATED APPLICATION**

The present disclosure claims a priority of Chinese Patent Application No. 202310069113.6 entitled "performance evaluation method and apparatus, and readable storage medium" filed on February 6, 2023, the entire contents of which are hereby incorporated by reference in their entirety.

**TECHNICAL FIELD**

The present disclosure relates to the field of information communication technologies, and in particular to a performance evaluation method and apparatus, and a readable storage medium.

**BACKGROUND**

In a new radio (New Radio, NR) system, a downlink (Downlink, DL) codebook of type II (Type II) can achieve relatively high channel state information (Channel State Information, CSI) feedback accuracy. However, the feedback overhead of the DL Type II codebook is relatively high. Research indicates that employing artificial intelligence (Artificial Intelligence, AI)/machine learning (Machine Learning, ML) models for CSI compression feedback can reduce CSI feedback overhead while maintaining the same feedback accuracy or improve feedback accuracy under the same overhead.

Since models are trained based on data, the complexity and variability of wireless communication systems make it impossible to guarantee that model-based CSI compression feedback algorithms will always have a good performance. If a model-based CSI compression feedback algorithm is unsuitable for a current channel condition, but the terminal still compress and feedback CSI based on this algorithm, the base station will obtain incorrect CSI information, adversely affecting downlink transmission performance.

Therefore, how to evaluate or monitor the performance of such models is a technical problem to be solved by a person skilled in the art.

**SUMMARY**

Embodiments of the present disclosure provide a performance evaluation method and apparatus, and a readable storage medium, to improve system performance.

According to a first aspect, an embodiment of the present disclosure provides a performance evaluation method, applied to a first device and including: evaluating performance of a target object based on a first CSI and a second CSI, where the target object includes a target model and/or a first method; the target model includes one or more of a first model and a second model; the first method includes a method for determining and/or feeding back CSI; and the first CSI is obtained based on the first model or the second model.

Optionally, the first method includes one or more of the following:

　　a method for determining the first CSI or the second CSI;
　　a method for determining and/or feeding back CSI based on the first CSI or the second CSI;
　　a method for determining and/or feeding back CSI based on the first model;
　　a method for determining and/or feeding back CSI based on the second model;
　　a method for determining and/or feeding back a third CSI corresponding to the first CSI.

Optionally, the evaluating the performance of the target object based on the first channel state information (CSI) and the second CSI includes:

　　evaluating the performance of the target object based on a first metric corresponding to the first CSI and a second metric corresponding to the second CSI; or
　　evaluating the performance of the target object based on a third metric corresponding to the target model.

Optionally, the evaluating the performance of the target object based on the first metric corresponding to the first CSI and the second metric corresponding to the second CSI includes:

　　evaluating the performance of the target object based on a relative relationship between the first metric and the second metric,
　　where the relative relationship includes one or more of the following:
　　a size relationship between the first metric and the second metric;
　　a proportional relationship between the first metric and the second metric;
　　a difference between the first metric and the second metric or an absolute value of the difference.

Optionally, the first metric and the second metric are performance metrics of a same type, and the performance metrics include one or more of the following:

　　an accuracy metric;
　　a system performance metric;
　　an metric corresponding to distribution;
　　an metric related to a channel quality.

Optionally, the evaluating the performance of the target model and/or the first method includes one or more of the following:

evaluating whether the target object fails;
evaluating whether the target object is available;
evaluating relative performance between the target object and at least one other object.

Optionally, the evaluating the relative performance between the target object and at least one other object includes one or more of the following:

evaluating whether the performance of the target model is superior to at least one other model;
evaluating a model with an optimal performance from the target model and the at least one other model;
evaluating whether the performance of the first method is superior to at least one other method for determining and/or feeding back CSI;
determining through evaluation a method with an optimal performance from the first method and at least one other method for determining and/or feeding back CSI.

Optionally, the second CSI is obtained based on a third model, or the second CSI is obtained based on a second method; the third model is different from the first model and the second model, and the second method is different from the first method.

Optionally, that the second CSI is obtained based on the second method includes one or more of the following:

the second CSI is original channel information obtained based on channel estimation, or information obtained by processing the original channel information;
the second CSI is CSI obtained based on a codebook.

Optionally the third model includes one or more of the following: a reference model; a generalization model.

Optionally, the reference model includes: a reference model whose generalization meets first requirement.

Optionally, the first CSI and the second CSI are obtained based on same target channel information; or the first CSI and the second CSI are obtained based on different target channel information.

Optionally, the evaluating the performance of the target object based on the third metric of the target model includes:

obtaining the third metric of the target object based on the first CSI and the second CSI; and
evaluating the performance of the target object based on the third metric.

Optionally, the evaluating the performance of the target object based on the third metric includes: evaluating the performance of the target object based on a relative relationship between the third metric and a preset threshold.

Optionally, that the first CSI is obtained based on the first model includes: that the first CSI is obtained based on the first model and the second CSI; or that the first CSI is obtained based on the second model includes: that the first CSI is obtained based on the second model and the second CSI.

Optionally, the target model is preset in the first device and/or a second device.

Optionally, the first device includes a terminal, and the method further includes:

receiving a first reference signal transmitted by a network device, obtaining the target channel information based on the first reference signal, and determining the first CSI and the second CSI based on the target channel information; or
receiving the target channel information transmitted by a network device, and determining the first CSI and the second CSI based on the target channel information; or
receiving a first reference signal and a second reference signal transmitted by a network device; determining first target channel information based on the first reference signal, determining second target channel information based on the second reference channel, determining the first CSI based on the first target channel information, and determining the second CSI based on the second target channel information, where the target channel information includes the first target channel information and the second target channel information; or
receiving first target channel information and second target channel information transmitted by a network device, determining the first CSI based on the first target channel information, and determining the second CSI based on the second target channel information, where the target channel information includes the first target channel information and the second target channel information.

Optionally, the first device includes a terminal, and the method further includes:

receiving first indication information transmitted by a network device, where the first indication information is used to instruct the terminal to transmit first CSI feedback information corresponding to the first CSI and second CSI feedback information corresponding to the second CSI; and
transmitting the first CSI feedback information and the second CSI feedback information to the network device in response to the first indication information.

Optionally, the first device includes a terminal, and the method further includes: transmitting the first CSI and/or the second CSI to a third device.

Optionally, the first device includes a terminal, and the method further includes: obtaining a third CSI based on one of the first model and the second model and based on the second CSI; and obtaining the first CSI based on the third CSI.

Optionally, the obtaining the first CSI based on the third CSI includes:

transmitting the third CSI to a network device, and receiving the first CSI corresponding to the third CSI and transmitted by the network device; or
obtaining the first CSI based on the third CSI and the first model; or
obtaining the first CSI based on the third CSI and the second model.

Optionally, the obtaining a third metric of the target model based on the first CSI and the second CSI includes: obtaining a third metric of the target model based on the first CSI and the third CSI.

Optionally, the first device includes a terminal, and the method further includes:

transmitting the second CSI and the third CSI to a network device; or
transmitting the first CSI and the second CSI to a network device; or
transmitting the first CSI, the second CSI, and the third CSI to a network device.

Optionally, the first device includes a network device, and the method further includes:

transmitting a first reference signal to a terminal, where the first reference signal is used to determine the target channel information; or
transmitting the target channel information to a terminal; or
transmitting a first reference signal and a second reference signal to a terminal, where the first reference signal and the second reference signal are respectively used to determine first target channel information and second target channel information, and the target channel information includes the first target channel information and the second target channel information; or
transmitting the first target channel information and the second target channel information to a terminal, where the target channel information includes the first target channel information and the second target channel information.

Optionally, the first device includes a network device, and the method further includes:

transmitting first indication information to a terminal, where the first indication information is used to instruct the terminal to transmit first CSI feedback information corresponding to the first CSI and second CSI feedback information corresponding to the second CSI;
obtaining first target channel information based on the first CSI feedback information, and obtaining the first CSI based on the first target channel information; and
obtaining second target channel information based on the second CSI feedback information, and obtaining the second CSI based on the second target channel information,
where the target channel information includes the first target channel information and the second target channel information.

Optionally, the first target channel information is channel information corresponding to a first reference signal transmitted to the terminal, or the first target channel information is channel information obtained by the network device based on an uplink reference signal; or the second target channel information is channel information corresponding to a second reference signal transmitted to the terminal, or the second target channel information is channel information obtained by the network device based on an uplink reference signal.

Optionally, the first device includes a network device, and the method further includes: receiving a third CSI transmitted by a terminal; and transmitting the first CSI to the terminal, where the first CSI is obtained based on one of the first model and the second model and based on the third CSI.

Optionally, the first device includes a network device, and the method further includes:

receiving the second CSI and a third CSI transmitted by a terminal, and generating the first CSI based on one of the first model and the second model and based on the third CSI; or
receiving the first CSI and the second CSI transmitted by a terminal; or

Optionally, the first device includes a network device, and the method further includes: transmitting the first CSI and/or the second CSI to a third device.

Optionally, the first device includes a third device, and the method further includes:

receiving the first CSI and the second CSI transmitted by a terminal; or
receiving the first CSI and the second CSI transmitted by a network device; or
receiving the first CSI transmitted by a terminal, and receiving the second CSI transmitted by a network device.

Optionally, the first device includes a third-party device, and the method further includes:

> receiving the first CSI and the second CSI transmitted by a terminal; or
> receiving the first CSI and the second CSI transmitted by a network device; or
> receiving the first CSI transmitted by a network device, and receiving the second CSI transmitted by a terminal.

Optionally, the method further includes: generating a performance report of the target object; and transmitting the performance report to a second device.

Optionally, the method further includes: evaluating performance of one or more of the target object and at least one other object based on the first metric corresponding to the first CSI and a metric corresponding to the at least one other object.

Optionally, in a case that the first device includes a network device or a third device, the method further includes performing one or more of the following based on an evaluation result of the target object: activation of a model, deactivation of the model, switching of the model, fallback of the model, selection of the model.

According to a second aspect, an embodiment of the present disclosure provides a performance evaluation apparatus, applied to a first device, the apparatus including:

a first processing unit, configured to evaluate performance of a target object based on a first CSI and a second CSI, where the target object includes a target model and/or a first method; the target model includes one or more of a first model and a second model; the first method includes a method for determining and/or feeding back CSI; and the first CSI is obtained based on the first model or the second model.

According to a third aspect, an embodiment of the present disclosure provides a performance evaluation apparatus, applied to a first device. The apparatus includes a memory, a transceiver and a processor, where the memory is configured to store a computer program; the transceiver is configured to transmit and receive data under control of the processor; and the processor is configured to read the computer program in the memory to perform the following operations:

evaluating performance of a target object based on a first CSI and a second CSI, where the target object includes a target model and/or a first method; the target model includes one or more of a first model and a second model; the first method includes a method for determining and/or feeding back CSI; and the first CSI is obtained based on the first model or the second model.

According to a fourth aspect, an embodiment of the present disclosure further provides a processor-readable storage medium. The readable storage medium stores a computer program, and the computer program, when executed by a processor, implements steps of the performance evaluation method as described above.

In the embodiments of the present disclosure, the performance of the target object can be evaluated based on the first CSI and the second CSI, so that performance evaluation or monitoring of the target object can be implemented, and system performance can be improved.

## BRIEF DESCRIPTION OF THE DRAWINGS

FIG. 1 is a flow chart of a performance evaluation method according to an embodiment of the present disclosure;

FIG. 2 is a schematic diagram of a two-side deployment model for CSI compression;

FIG. 3 is a second flow chart of a performance evaluation method according to an embodiment of the present disclosure;

FIG. 4 is a third flow chart of a performance evaluation method according to an embodiment of the present disclosure;

FIG. 5 is a fourth flow chart of a performance evaluation method according to an embodiment of the present disclosure;

FIG. 6 is a fifth flow chart of a performance evaluation method according to an embodiment of the present disclosure;

FIG. 7 is a sixth flow chart of a performance evaluation method according to an embodiment of the present disclosure;

FIG. 8 is a seventh flow chart of a performance evaluation method according to an embodiment of the present disclosure;

FIG. 9 is a first structural diagram of a performance evaluation apparatus according to an embodiment of the present disclosure; and

FIG. 10 is a second structural diagram of a performance evaluation apparatus according to an embodiment of the present disclosure.

## DETAILED DESCRIPTION

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

Embodiments of the present disclosure provide a performance evaluation method and apparatus, to improve system performance.

The method and the apparatus are based on the same application concept, and because the method and the apparatus solve a similar principle of a problem, the implementation of the apparatus and the method may refer to each other, and details are not described herein again.

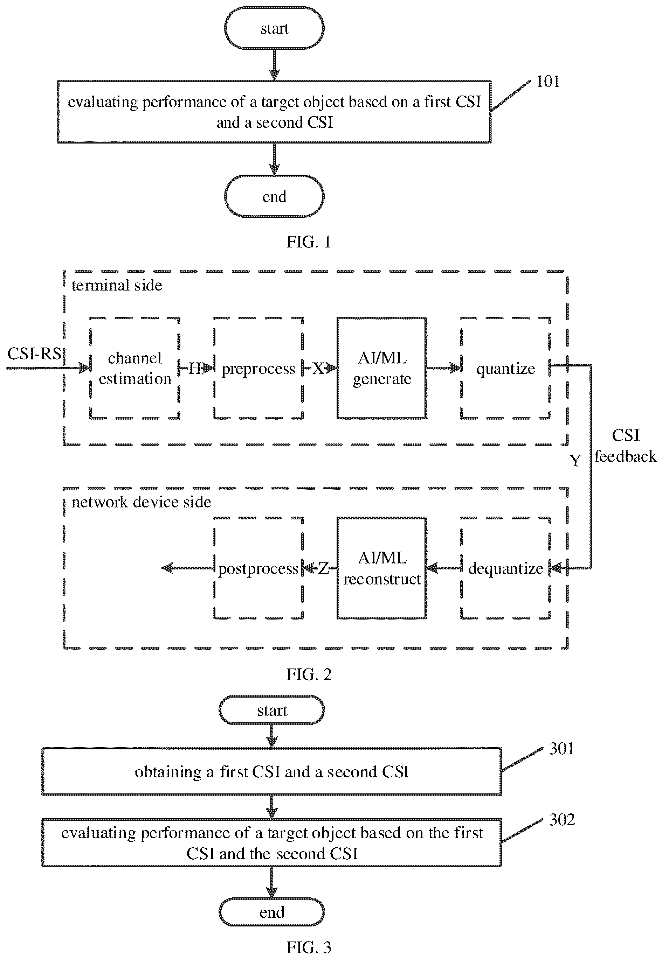

Referring to FIG. 1, FIG. 1 is a flow chart of a performance evaluation method according to an embodiment of the present disclosure. As shown in FIG. 1, the method includes the following steps.

Step 101: evaluating performance of a target object based on a first CSI and a second CSI.

The target object includes a target model and/or a first method; the target model includes one or more of a first model and a second model; the first method includes a method for determining and/or feeding back CSI; and the first CSI is obtained based on the first model or the second model.

Optionally, the first method includes one or more of the following: a method for determining the first CSI or the second CSI; a method for determining and/or feeding back CSI based on the first CSI or the second CSI; a method for determining and/or feeding back CSI based on the first model; a method for determining and/or feeding back CSI based on the second model; a method for determining and/or feeding back a third CSI corresponding to the first CSI.

The first model may be a first device-side model, the second model may be a second device-side model, or may be a model pair composed of a first device-side model and a second device-side model. The first device may be a terminal or a base station, and correspondingly, the second device may be a base station or a terminal. The first model or the second model may include, but not limited to, an AI model, an ML model, a neural network model, a data driving technology model, and the like. Optionally, in the embodiments of the present disclosure, the target model is preset in the first device and/or the second device. For example, if the first device is a terminal, the second device is a base station, the terminal may be preconfigured with a first device-side model (i.e., a terminal-side model), and the base station may be preconfigured with a second device-side model (i.e., a base station-side model). For another example, the terminal side may be preconfigured with both a first device-side model (i.e., a terminal-side model) and a second device-side model (i.e., a base station-side model) at the same time.

It is assumed that the first model is a terminal-side model, the second model is a base station-side model, and if the target model only includes the first model, the performance of the terminal-side model is evaluated herein. This approach is applicable to at least scenarios where multiple terminal-side models and one base station-side model are included, and it can also be used for scenarios where multiple terminal-side model and multiple base station-side model are included. If the target model includes the first model and the second model, then performances of the terminal-side model and the base station-side model are evaluated herein. If the target model includes the second model, then the performance of the base station-side model is evaluated herein. This approach is applicable to at least scenarios where one terminal-side model and multiple base station-side models are included, and it can also be used for scenarios where multiple terminal-side model and multiple base station-side model are included.

It is assumed that the first model is a base station-side model, the second model is a terminal-side model, and if the target model only includes the first model, the performance of the base station-side model is evaluated herein. This approach is applicable to at least scenarios where multiple terminal-side models and one base station-side model are included, and it can also be used for scenarios where multiple terminal-side model and multiple base station-side model are included. If the target model includes the first model and the second model, then performances of the terminal-side model and the base station-side model are evaluated herein. If the target model includes the second model, then the performance of the base station-side model is evaluated herein. This approach is applicable to at least scenarios where one terminal-side model and multiple base station-side models are included, and it can also be used for scenarios where multiple terminal-side model and multiple base station-side model are included.

Optionally, the first method includes any one or more of the following:

an AI-based CSI determination method, and/or a CSI feedback method corresponding to the AI-based CSI determination method;
a codebook-based CSI determination method, and/or a CSI feedback method corresponding to the AI-based CSI determination method.

Optionally, the first model and the second model have a correspondence. An exemplary correspondence is that the first model is a model that generates CSI feedback information based on a given CSI, while the second model is a model that reconstructs the given CSI from the CSI feedback information; or, the second model is a model that generates CSI feedback information based on a given CSI, while the first model is a model that reconstructs the given CSI from the CSI feedback information.

As shown in FIG. 2, a common AI-based dual-side deployment CSI feedback communication flow is as follows:

on the terminal side, original channel information or preprocessed channel information is compressed by using a terminal-side model (also referred to as a channel state information (Channel State Information, CSI) generation part (generation part) ), or an encoder (encoder)), the compressed information is quantized into binary bits, and the binary bits are fed back to a base station; and

on the network side (i.e., a network device side and a base station side), the binary bits fed back by the terminal side are dequantized, and then channel information is recovered by using a base station-side model (also referred to as a CSI reconstruction part (CSI reconstruction part), or referred to as a decoder). For the example of FIG. 2, in the case that the first model is a model that generates one piece of CSI feedback information based on a given CSI, and the second model is a model that reconstructs the given CSI from the CSI feedback information, the first model is a CSI generation part on the terminal side, and the second model is a CSI reconstruction part on the base station side. In the case that the second model is a model that generates one piece of CSI feedback information based on a given CSI, and the first model is a model that reconstructs the given CSI from the CSI feedback information, the second model is a CSI generation part on the terminal side, and the first model is a CSI reconstruction part on the base station side.

Optionally, the first CSI is a CSI determined based on a model of the CSI reconstruction part on the base station side in FIG. 2.

Optionally, in the embodiment of the present disclosure, the second CSI manner is obtained in a different manner from the first CSI. For example, the first CSI and the second CSI may be obtained based on different methods or models.

**In** an embodiment of the present disclosure, the second CSI is obtained based on the third model, or the second CSI is obtained based on the second method. The third model is different from the first model and the second model, and the second method is different from the first method. The third model includes one or more of the following: a reference model; and a generalization model. The reference model includes: a reference model that meets a first requirement in generalization. Of course, other forms of models may also be used as the third model herein.

For example, the reference model may be a reference model used to evaluate model performance. For example, in a case that the method embodiment is applied to the terminal, the reference model may be determined by the terminal, or transmitted by the network device to the terminal, or agreed by the network device and the terminal. In a case that the method embodiment is applied to the network device, the reference model may be determined by the network device, or transmitted by the terminal to the network device, or agreed by the network device and the terminal.

For example, the generalization model may be a model trained on data from multiple scenarios or multiple configurations. For example, the first requirement may be set according to needs, for instance, the first requirement may require good generalization performance or specify that the evaluation metric for generalization is greater than or less than a certain preset value.

Specifically, that the second CSI is obtained based on the second method includes one or more of the following:

the second CSI is original channel information obtained based on channel estimation, or information obtained by processing the original channel information;

the second CSI is CSI obtained based on a codebook.

The original channel information may be channel information obtained by a terminal performing channel estimation based on a downlink reference signal, and the processing may be a preprocessing operation, for example, may include: time-domain windowing processing, noise suppression, singular value decomposition (Singular Value Decomposition, SVD), channel transformation to an angle delay domain, and the like. In this case, the second CSI is also referred to as ground truth CSI, or target CSI. If the second CSI is obtained based on a codebook, the codebook includes, but is not limited to, Type 1 codebook, Type II codebook, eType 1 codebook, or eType II codebook in the New Radio (New Radio, NR) system. In this scenario, the second CSI may be a precoding matrix, rank indicator (Rank indicator, RI), channel quality indicator (Channel Quality Indicator, CQI), etc.

In step 101, the performance of the target object may be evaluated in a variety of manners as follows:

manner 1: evaluating the performance of the target object based on a first metric corresponding to the first CSI and a second metric corresponding to the second CSI; or

manner 2: evaluating the performance of the target object based on a third metric corresponding to the target model.

In manner 1, the performance of the target object may be specifically evaluated based on a relative relationship between the first metric and the second metric, where the relative relationship includes one or more of the following:

(1) a size relationship between the first metric and the second metric.

In this case, the performance of the target object is evaluated based on the relative merit of the first metric and the second metric. The relative merit of the first metric and the second metric may be determined according to numerical values of the first metric and the second metric. Specifically, whether a larger value or a smaller value indicates better performance depends on a type of metric. For example, if the type of the metric is RSRP, SGCS, GCS, SINR, throughput, etc., the larger metric value indicates better performance; and if the type of the metric is BLER, MMSE, etc., the smaller metric value indicates better performance.

For example, if the first metric is larger than the second metric, it indicates that the performance of the target object is good, and/or if the first metric is smaller than the second metric, it indicates that the performance of the target object is not good or is poor; and/or

　　　if the first metric is larger than the second metric, it indicates that the target object is usability, and/or if the first metric is smaller than the second metric, it indicates that the performance of the target object is unavailable; and/or
　　　if the first metric is smaller than the second metric, it indicates that the target object fails; and/or
　　　if the first metric is larger than the second metric, it indicates that the performance of the target object is better than the performance of the model and/or the method corresponding to the second metric, and/or if the first metric is smaller than the second metric, it indicates that the performance of the target object is inferior the performance of the model and/or method corresponding to the second metric.

For another example, if the first metric is smaller than the second metric, it indicates that the performance of the target object is good, and/or if the first metric is larger than the second metric, it indicates that the performance of the target object is not good or is poor; and/or

　　　if the first metric is smaller than the second metric, it indicates that the target object is available, and/or if the first metric is larger than the second metric, it indicates that the performance of the target object is unavailable; and/or
　　　if the first metric is larger than the second metric, it indicates that the target object fails; and/or
　　　if the first metric is smaller than the second metric, it indicates that the performance of the target object is better than the performance of the model and/or method corresponding to the second metric, and/or if the first metric is larger than the second metric, it indicates that the performance of the target object is inferior to the performance of the model and/or method corresponding to the second metric.

(2) a proportional relationship between the first metric and the second metric.
K1 may be used to represent the first metric corresponding to the first CSI, and K2 represents the second metric of the second CSI. A ratio of K1 to K2 is determined as ( $\frac{K_1}{K_2}$ or $\frac{K_2}{K_1}$ ), and the performance of the target object is evaluated based on the ratio. For example, the performance of the target object may be evaluated according to a range where the ratio is located.

For example, if the ratio of K1 to K2 is within a first value range, it indicates that the performance of the target object is good, and/or if the ratio of K1 to K2 is within a second value range, it indicates that the performance of the target object is not good or is poor; and/or

if the ratio of K1 to K2 is within the first value range, it indicates that the target object is available, and/or if the ratio of K1 to K2 is within the second value range, it indicates that the target object is unavailable/failed; and/or

If the ratio of K1 to K2 is within the first value range, it indicates that the performance of the target object is superior to the performance of the model and/or method corresponding to the second metric, and/or if the ratio of K1 to K2 is within the second value range, it indicates that the performance of the target object is inferior to the performance of the model and/or method corresponding to the second metric.

Examples of the first value range and the second value range include but are not limited to:

　　　the first value range is a range greater than/not greater than a first threshold value, and the second value range is a range not less than/less than the first threshold value;
　　　the first value range is a range less than/not less than a first threshold value, and the second value range is a range not greater than/greater than a first threshold value;
　　　the first value range is a range in which the absolute value is greater than/not greater than the first threshold value, and the second value range is a range in which the absolute value is not less than/less than the first threshold value;
　　　the first value range is a range in which an absolute value is less than/not less than the first threshold value, and the second value range is a range in which an absolute value is not greater than/greater than the first threshold value;
　　　the first value range is a range greater than/not greater than the first threshold value, and the second value range is a range not less than/less than the second threshold value; the second threshold value is not equal to the first threshold value (the second threshold value is greater than the first threshold value, or the second threshold value is less than the first threshold value);
　　　the first value range is a range less than/not less than the first threshold value, and the second value range is a range not greater than/greater than the second threshold value; the second threshold value is not equal to the first threshold value (the second threshold value is greater than the first threshold value, or the second threshold value is less than the first threshold value);

the first value range is a range in which the absolute value is greater than/not greater than the first threshold value, and the second value range is a range in which the absolute value is not less than/less than the second threshold value; the second threshold value is not equal to the first threshold value (the second threshold value is greater than the first threshold value, or the second threshold value is less than the first threshold value);

the first value range is a range in which the absolute value is less than/not less than the first threshold value, and the second value range is a range in which the absolute value is not greater than/greater than the second threshold value; the second threshold value is not equal to the first threshold value (the second threshold value is greater than the first threshold value, or the second threshold value is less than the first threshold value).

(3) a difference between the first metric and the second metric or an absolute value of the difference.

K1 may be used to represent the first metric corresponding to the first CSI, and K2 represents the second metric corresponding to the second CSI. The difference between K1 and K2 (K1-K2, or K2-K1), or the absolute value |K1-K2| of K1-K2 is determined, and the performance of the target object is evaluated based on the obtained difference or absolute value.

For example, if K1-K2 or K2-K1 or |K1-K2| is within a third value range, it indicates that the performance of the target object is good, and/or if K1-K2 or K2-K1 or |K1-K2| is within the fourth value range, it indicates that the performance of the target object is not good or is poor; and/or

if K1-K2 or K2-K1 or |K1-K2| is within a third value range, it indicates that the target object is available, and/or if K1-K2 or K2-K1 or/K1-K2/is within a fourth value range, it indicates that the target object is unavailable/failed; and/or

If K1-K2 or K2-K1 or |K1-K2| is within the third value range, it indicates that the performance of the target object is better than the performance of the model and/or the method corresponding to the second metric, and/or if K1-K2 or K2-K1 |K1-K2| is within the fourth value range, the performance of the target object is not the performance of the model and/or the method corresponding to the second metric.

Examples of the third value range and the fourth value range include but are not limited to:

a third value range is a range greater than/not greater than a third threshold, and a fourth value range is a range not less than/less than a third threshold;

a third value range is a range less than/not less than a third threshold, and a fourth value range is a range not greater than/greater than a third threshold;

a third value range is a range in which an absolute value is greater than/not greater than a third threshold, and a fourth value range is a range in which an absolute value is not less than/less than a third threshold;

a third value range is a range in which an absolute value is less than/not less than a third threshold, and a fourth value range is a range in which an absolute value is not greater than/greater than a third threshold;

the third value range is a range greater than/not greater than a third threshold, and the fourth value range is a range not less than/less than a fourth threshold; the fourth threshold is not equal to the third threshold (the fourth threshold is greater than the third threshold, or the fourth threshold is less than the third threshold);

the third value range is a range less than/not less than a third threshold, and the fourth value range is a range not greater than/greater than a fourth threshold; the fourth threshold is not equal to the third threshold (the fourth threshold is greater than the third threshold, or the fourth threshold is less than the third threshold);

the third value range is a range in which the absolute value is greater than/not greater than the third threshold, and the fourth value range is a range in which the absolute value is not less than/less than the fourth threshold; the fourth threshold is not equal to the third threshold (the fourth threshold is greater than the third threshold, or the fourth threshold is less than the third threshold);

the third value range is a range in which the absolute value is less than/not less than a third threshold, and the fourth value range is a range in which the absolute value is not greater than/greater than a fourth threshold; and the fourth threshold is not equal to the third threshold (the fourth threshold is greater than the third threshold, or the fourth threshold is less than the third threshold).

In the above embodiments, each value range and threshold value may be set as required.

Optionally, in Manner 1, the first metric and the second metric are performance metrics of a same type, and the performance metric includes one or more of the following:

an index of precision: square generalized cosine similarity (Squared GCS, GCS), generalized cosine similarity (Generalized Cosine Similarity, GCS), normalized mean square error (Normalized Mean Square Error, NMSE), mean square error (Mean square error, MSE), etc.

an index of system performance: Block Error Rate (Block Error Rate, BLER), throughput, hypothetical BLER (hypothetical BLER), hypothetical throughput (hypothetical throughput), acknowledgement (Acknowledgement, ACK), negative acknowledgement (Negative Acknowledgement, NACK);

an metric corresponding to the distribution is a mean value, a mean square error, and the like;

metrics related to channel quality: reference signal received power (Reference Signal Received Power, RSRP), reference signal received quality (Reference Signal Received Quality, RSRQ), signal-to-interference-noise ratio (Signal-to-interference-noise ratio, SINR), etc.

In the embodiment of the present disclosure, the first metric and the second metric may be, for example, RSRP or SGCS.

For example, for the precision metric, the first metric may be determined based on the first CSI and the target channel information, and the second metric may be determined based on the second CSI and the target channel information. The target channel information may be, for example, channel information obtained based on a CSI reference signal (CSI Reference Signal, CSI-RS), a demodulation reference signal (Demodulation Reference Signal, DMRS)), an uplink reference signal (for example, a sounding reference signal (Sounding Reference Signal, SRS)), and the like.

A manner for calculating the hypothetical BLER includes: obtaining RSRP/SINR corresponding to CSI, and mapping the RSRP/SINR to the hypothetical BLER. A manner for calculating the hypothetical throughput includes: obtaining an RSRP/SINR corresponding to CSI, and mapping the RSRP/SINR to the hypothetical throughput, for example, calculating a throughput (throughput) corresponding to an RSRP/SINR corresponding to CSI by using a Shannon formula.

In manner 2, the third metric of the target object may be obtained based on the first CSI and the second CSI, and the performance of the target object is evaluated based on the third metric. Specifically, the performance of the target object may be evaluated based on a relative relationship between the third metric and a preset threshold. The preset threshold may be set as required. For example, the preset threshold is a threshold configured by the base station, a threshold configured by the terminal, a threshold agreed by the protocol, and the like.

The third metric of the target object may include an SGCS, a GCS, a minimum mean square error (Minimum Mean Square Error, MMSE), an MSE, and the like. For example, if the third metric is greater than a preset threshold, it may be considered that the performance of the target object is good; or, the third metric is less than the preset threshold, and it may be considered that the performance of the target object is good. Specifically, whether a larger value or a smaller value indicates better performance depends on a type of metric. For example, if the type of the metric is SGCS, GCS, etc., the larger metric value indicates better performance; if the type of the metric is MMSE, the smaller metric value indicates better performance.

Optionally, in this case, the obtaining the first CSI based on the first model may include: obtaining the first CSI based on the first model and the second CSI. For example, the first CSI is CSI obtained by using the second CSI or a preprocessed second CSI as an input of the first model. The obtaining the first CSI based on the second model includes: obtaining the first CSI based on the second model and the second CSI.

In an embodiment of the present disclosure, a type of the first CSI and/or a type of the second CSI includes the following types:

a first type: a precoding matrix, for example, a feature vector, an eType II-like PMI (e.g., a feature vector after angle delay domain transformation), and the like;

a second type: an original channel response (e.g., a full multiple-input multiple-output (Multiple-In Multiple Out, MIMO) channel of Tx * Rx dimension), for example, a frequency-domain original channel response, a time-domain original channel response, etc.

In the embodiments of the present disclosure, the evaluating the performance of the target model and/or the first method includes one or more of the following:

evaluating whether the target object fails;
evaluating whether the target object is available;
evaluating a relative performance of the target object and at least one other model.

The evaluating the relative performance between the target object and the at least one other object may include one or more of the following:

evaluating whether the performance of the target model is superior to at least one other model;
evaluating a model with an optimal performance from the target model and the at least one other model; for example, obtaining performance metrics of the target model and the at least one other model, taking a model with the maximum performance metric as a model with the optimal performance (or referred to as effect), or taking a model with the minimum performance metric as a model with the optimal performance (or referred to as effect);
evaluating whether the performance of the first method is superior to at least one other method for determining and/or feeding back CSI;
determining through evaluation a method with an optimal performance from the first method and at least one other method for determining and/or feeding back CSI, for example, obtaining performance metrics of the first method and at least one other method for determining and/or feeding back CSI, taking a method with the maximum performance metric as a method with the optimal performance (or referred to as effect), or taking a method with the minimum performance metric as a method with the optimal performance (or referred to as effect).

Optionally, in the embodiment of the present disclosure, the first CSI and the second CSI are obtained based on same target channel information; or, the first CSI and the second CSI are obtained based on different target channel information. The target channel information may be, for example, channel information obtained based on a first reference signal (CSI reference signal (CSI Reference Signal, CSI-RS), a demodulation reference signal (Demodulation Reference Signal, DMRS)), an uplink reference signal (for example, a sounding reference signal (Sounding Reference Signal, SRS)), and the like.

Optionally, on the basis of the foregoing embodiments, performances of one or more of the target object and the at least one other object may be evaluated based on the first metric corresponding to the first CSI and the metric corresponding to the at least one other object. That is, the embodiments of the present disclosure may also be extended to evaluate performances of a plurality of objects.

For example, an example is given that an object is a model, it is assumed that the object includes a first model, a second model, a third model, and/or a fourth model. In this case, if the third model, the fourth model, and the like respectively correspond to the third CSI, the fourth CSI, and the like, the performance of the first model may be evaluated based on the first CSI, the second CSI, the third CSI, the fourth CSI, and the like. For example, the performance of the first model, and/or the second model, and/or the third model, and/or the fourth model may be evaluated by comparing the one or more metrics of the first CSI, the second CSI, the third CSI, the fourth CSI, and the like. In this process, each CSI may be CSI obtained by using a model, or may be CSI obtained in a non-model manner (for example, obtained based on original channel information and obtained based on a codebook), or a part of CSI is CSI obtained by using a model, and another part of CSI is CSI obtained in a non-model manner.

The method in the embodiments of the present disclosure may be applied to a first device, and the first device may be a terminal, a network device (for example, a base station), a third device, or the like.

In the embodiments of the present disclosure, the third device may be a device independent of the network device and the terminal, for example, a device for AI processing, a cloud device, and the like. Optionally, the third device may be a device that performs a model management function. Optionally, the third device may be a device configured to perform model training, evaluation, and the like.

**In** the embodiments of the present disclosure, the performance of the target object may be evaluated based on the first CSI and the second CSI, so that performance evaluation or monitoring of the target object can be implemented, and system performance can be improved.

The following separately describes the technical solutions of the embodiments of the present disclosure by using a terminal, a network device (taking a base station as an example) and a third device as an execution subject.

Referring to FIG. 3, FIG. 3 is a flow chart of a performance evaluation method according to an embodiment of the present disclosure, which is applied to a terminal. The method may include the following steps.

Step 301: obtaining a first CSI and a second CSI.

The process may include any one of the following manners:

(1) receiving a first reference signal transmitted by a base station; obtaining target channel information based on the first reference signal; and determining the first CSI and the second CSI based on the target channel information. Correspondingly, in this manner, the base station transmits the first reference signal to the terminal, where the first reference signal is used to determine the target channel information.

(2) receiving target channel information transmitted by a base station, and determining the first CSI and the second CSI based on the target channel information. Correspondingly, in this manner, the base station transmits the target channel information to the terminal.

(3) receiving a first reference signal and a second reference signal transmitted by a base station; determining first target channel information based on the first reference signal, determining second target channel information based on the second reference channel, determining the first CSI based on the first target channel information, and determining the second CSI based on the second target channel information, where the target channel information includes the first target channel information and the second target channel information. In this manner, optionally, the first reference signal and the second reference signal have an association relationship, and the association relationship may be indicated by the base station, or predetermined by the terminal and the base station. Correspondingly, the base station transmits the first reference signal and the second reference signal to the terminal, where the first reference signal and the second reference signal are respectively used to determine the first target channel information and the second target channel information.

(4) receiving first target channel information and second target channel information transmitted by a base station, determining the first CSI based on the first target channel information, and determining the second CSI based on the second target channel information, where the target channel information includes the first target channel information and the second target channel information. Correspondingly, in this manner, the base station transmits the first target channel information and the second target channel information to the terminal.

Optionally, the determining the first CSI based on the target channel information includes: determining the first CSI based on the target channel information, the first model, and the second model.

Step 302: evaluating performance of a target object based on the first CSI and the second CSI.

For a specific process of this step, reference can be made to the manner 1 described in the foregoing embodiments.

Optionally, the terminal may further generate a performance report of the target object. Optionally, the terminal may further transmit the performance report to the base station or the third device.

Correspondingly, the base station or the third device receives the performance report. The performance report may also be referred to as a monitoring report, an evaluation report, and the like.

Optionally, the terminal may perform one or more of the following based on an evaluation result of the target object: activation of a model, deactivation of the model, switching of the model, fallback of the model, selection of the model.

Optionally, when performing the foregoing operations, the terminal may perform the foregoing operations based on an indication of the base station.

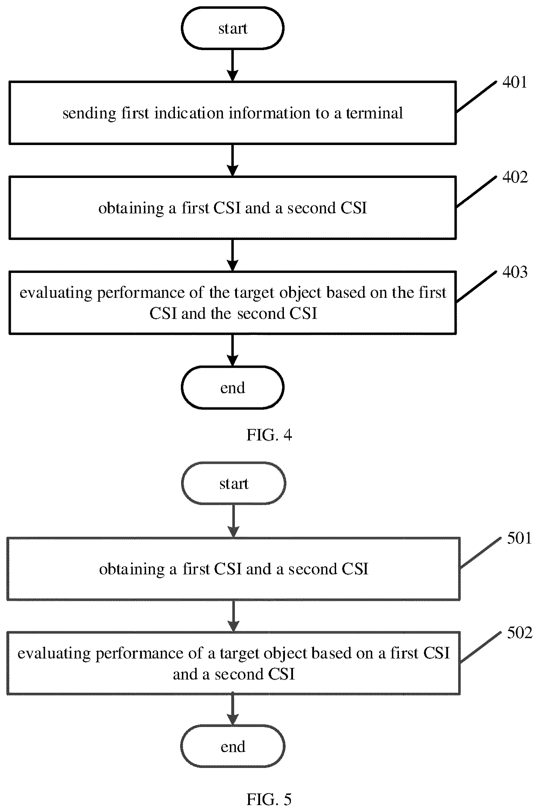

Referring to FIG. 4, FIG. 4 is a flow chart of a performance evaluation method according to an embodiment of the present disclosure, and the method is applied to a base station. In the embodiment, the target channel information is channel information corresponding to a reference signal (for example, a CSI-RS, a DMRS, and the like) fed back by the terminal. Optionally, the target channel information is channel information obtained by the base station based on an uplink reference signal (for example, an SRS). The method may include the following steps.

Step 401: transmitting first indication information to a terminal, where the first indication information is used to instruct the terminal to transmit first CSI feedback information corresponding to a first CSI and second CSI feedback information corresponding to a second CSI.

Correspondingly, the terminal receives the first indication information transmitted by the base station, and transmits the first CSI feedback information and the second CSI feedback information to the base station in response to the first indication information.

Step 402: obtaining a first CSI and a second CSI.

Specifically, in this step, the base station obtains first target channel information based on the first CSI feedback information, and obtains the first CSI based on the first target channel information; and obtains second target channel information based on the second CSI feedback information, and obtains the second CSI based on the second target channel information, where the target channel information includes the first target channel information and the second target channel information.

The first target channel information is channel information corresponding to a first reference signal transmitted to the terminal, or the first target channel information is channel information obtained by the base station based on an uplink reference signal; or the second target channel information is channel information corresponding to a second reference signal transmitted to the terminal, or the second target channel information is channel information obtained by the base station based on an uplink reference signal.

Optionally, the first CSI feedback information and the second CSI feedback information may be obtained based on a same reference signal or an uplink reference signal.

Step 403: evaluating performance of the target object based on the first CSI and the second CSI.

For a specific process of this step, reference can be made to the manner 1 described in the foregoing embodiments.

Optionally, the base station may generate a performance report of the target object. The performance report may also be referred to as a monitoring report, an evaluation report, and the like.

Optionally, the base station may transmit the performance report to the terminal or the third device. After receiving the performance report, the terminal or the third device may perform one or more of the following operations based on the performance report: activation of a model, deactivation of the model, switching of the model, fallback of the model, selection of the model.

Optionally, the base station may perform one or more of the following based on an evaluation result of the target object: activation of a model, deactivation of the model, switching of the model, fallback of the model, selection of the model.

Optionally, the base station may further instruct the terminal and/or the third device to perform one or more of the following operations: activation of a model, deactivation of the model, switching of the model, fallback of the model, selection of the model.

FIG. 5 is a flow chart of a performance evaluation method according to an embodiment of the present disclosure, and the method is applied to a third device. The method may include:

Step 501: obtaining a first CSI and a second CSI.

Specifically, the third device may obtain the first CSI and the second CSI in the following manner:

receiving the first CSI and the second CSI transmitted by a terminal; or
receiving the first CSI and the second CSI transmitted by a base station; or
receiving the first CSI transmitted by a terminal, and receiving the second CSI transmitted by a base station.

Correspondingly, in this step, the terminal transmits the first CSI and/or the second CSI to the third device. Alternatively, the base station transmits the first CSI and/or the second CSI to the third device.

Step 502: evaluating performance of a target object based on a first CSI and a second CSI.

For a specific process of this step, reference can be made to the manner 1 described in the foregoing embodiments.

Optionally, the third device may generate a performance report of the target object. The performance report may also be referred to as a monitoring report, an evaluation report, and the like.

Optionally, the third device may transmit the performance report to the terminal or the base station.

Optionally, the third device may perform one or more of the following based on an evaluation result of the target object: activation of a model, deactivation of the model, switching of the model, fallback of the model, selection of the model.

Optionally, the third device may further instruct the terminal and/or the third device of the base station to perform one or more of the following operations: activation of a model, deactivation of the model, switching of the model, fallback of the model, selection of the model.

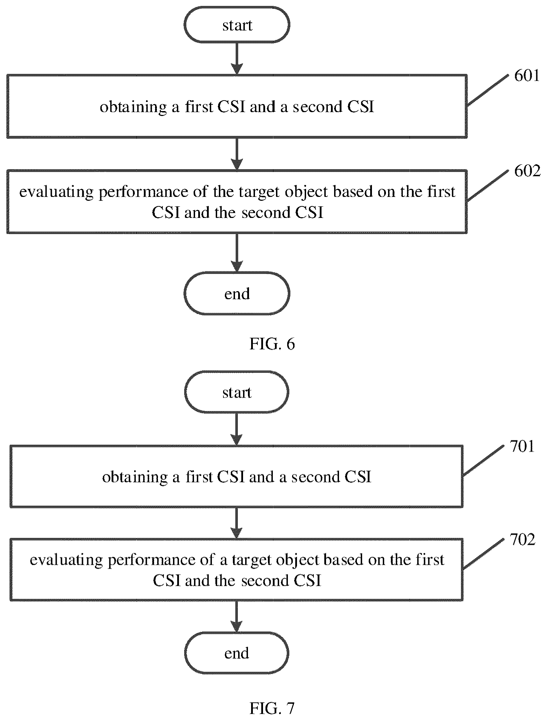

Referring to FIG. 6, FIG. 6 is a flow chart of a performance evaluation method according to an embodiment of the present disclosure, and the method is applied to a terminal. The method may include the following steps.

Step 601: obtaining a first CSI and a second CSI.

Optionally, the terminal may obtain a third CSI based on at least one of the first model and the second model; and may obtain the first CSI based on the third CSI.

The obtaining the first CSI based on the third CSI may include the following manners:

(1) transmitting, by the terminal, the third CSI to a base station, and receives the first CSI corresponding to the third CSI transmitted by the base station; or
(2) obtaining the first CSI based on the third CSI and the first model; or
(3) obtaining the first CSI based on the third CSI and the second model.

Optionally, that the terminal obtains the third CSI based on at least one of the first model and the second model includes that the terminal obtains the third CSI based on one of the first model and the second model and based on the second CSI.

Optionally, the obtaining the first CSI based on the third CSI includes: the terminal obtaining the first CSI based on one of the first model and the second model except for the model used to determine the third CSI and the third CSI. For example, the terminal obtains the third CSI based on the first model and the second CSI, and obtains the first CSI based on the third CSI and the second model; or the terminal obtains the third CSI based on the second model and the second CSI, and obtains the first CSI based on the third CSI and the first model.

Optionally, the terminal obtains the second CSI based on a downlink reference signal.

Correspondingly, the terminal may determine the third CSI based on one of the first model and the second model, and may transmit the third CSI to the base station. The base station may receive the third CSI transmitted by the terminal, and transmit the first CSI to the terminal, where the first CSI is obtained based on one of the first model and the second model except for the model used to determine the third CSI, and the third CSI.

Step 602: evaluating performance of the target object based on the first CSI and the second CSI.

For a specific process of this step, reference can be made to the manner 2 described in the foregoing embodiments.

Optionally, the terminal may further generate a performance report of the target object. The performance report may also be referred to as a monitoring report, an evaluation report, and the like.

Optionally, the terminal may further transmit the performance report to a base station or a third device. Correspondingly, the base station or the third device receives the performance report.

Optionally, the terminal may perform one or more of the following based on an evaluation result of the target object: activation of a model, deactivation of the model, switching of the model, fallback of the model, selection of the model.

Referring to FIG. 7, FIG. 7 is a flow chart of a performance evaluation method according to an embodiment of the present disclosure, and the method is applied to a base station. The method may include the following steps.

Step 701: obtaining a first CSI and a second CSI.

In this step, the base station may receive the second CSI and the third CSI transmitted by the terminal, and may generate the first CSI based on one of the first model and the second model, and based on the third CSI; or may receive the first CSI and the second CSI transmitted by the terminal; or may receive the first CSI, the second CSI, and the third CSI transmitted by the terminal.

Correspondingly, the terminal may transmit the second CSI and the third CSI to the base station; or may transmit the first CSI and the second CSI to the base station; or may transmit the first CSI, the second CSI, and the third CSI to the base station.

Step 702: evaluating performance of a target object based on the first CSI and the second CSI.

For a specific process of this step, reference can be made to the manner 2 described in the foregoing embodiments.

Optionally, the base station may generate a performance report of the target object. The performance report may also be referred to as a monitoring report, an evaluation report, and the like.

Optionally, the base station may transmit a performance report to the terminal or the third device. After receiving the performance report, the terminal or the third device may perform one or more of the following operations based on the performance report:

Optionally, the base station may perform one or more of the following based on an evaluation result of the target object: activation of a model, deactivation of the model, switching of the model, fallback of the model, selection of the model.

Optionally, the base station may further instruct the terminal and/or the third device to perform one or more of the following operations: activation of a model, deactivation of the model, switching of the model, fallback of the model, selection of the model.

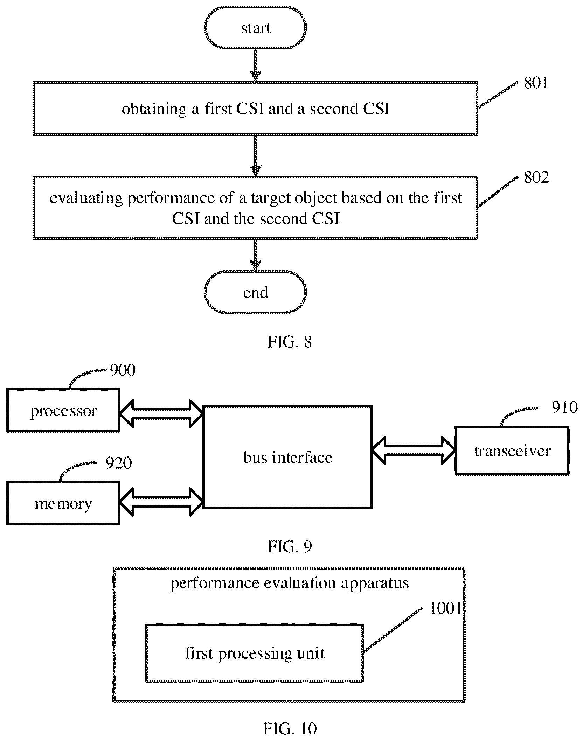

FIG. 8 is a flow chart of a performance evaluation method according to an embodiment of the present disclosure, and the method is applied to a third device. The method may include the following steps.

Step 801: obtaining a first CSI and a second CSI.

Specifically, the third device may obtain the first CSI and the second CSI in the following manner:

receiving the first CSI and the second CSI transmitted by a terminal; or
receiving the first CSI and the second CSI transmitted by a base station; or
receiving the first CSI transmitted by a base station, and receiving the second CSI transmitted by a terminal.

Correspondingly, in this step, the terminal transmits the first CSI and/or the second CSI to the third device. Alternatively, the base station transmits the first CSI and/or the second CSI to the third device. Specifically, the terminal transmits the first CSI and the second CSI or the second CSI to the third device; and the base station transmits the first CSI and the second CSI or the first CSI to the third device.

Step 802: evaluating performance of a target object based on the first CSI and the second CSI.

For a specific process of this step, reference can be made to the manner 2 described in the foregoing embodiments.

Optionally, the third device may generate a performance report of the target object. The performance report may also be referred to as a monitoring report, an evaluation report, and the like.

Optionally, the third device may transmit the performance report to the terminal or the base station.

Optionally, the third device may perform one or more of the following based on an evaluation result of the target object: activation of a model, deactivation of the model, switching of the model, fallback of the model, selection of the model.

Optionally, the third device may further instruct the terminal and/or the third device of the base station to perform one or more of the following operations: activation of a model, deactivation of the model, switching of the model, fallback of the model, selection of the model.

It can be seen from the description of the above embodiments that, in the embodiments of the present disclosure, an AI/ML target object performance evaluation method is provided, which makes up for the blank in the related art. When the CSI feedback based on the target object is adopted, the performance of the target object can be evaluated, so that activation, deactivation, selection, switching, fallback and updating of the model based on the performance can be achieved, thereby improving the system performance.

The technical solution according to embodiments of the present disclosure may be applied to various systems, particularly to a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, and a 5G New Radio (New Radio, NR) system. Each of the various systems includes a terminal and a network device. The systems may further include a core network portion, such as an evolved packet system (Evolved Packet System, EPS), or a 5G system (5GS).

The terminal device involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (Internet Protocol, IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, which is not limited herein. In some network architectures, the network device may include a centralized unit (centralized unit, CU) node and a distributed unit (distributed unit, DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, precoded transmission, beam forming transmission, or the like.

As shown in FIG. 9, a performance evaluation apparatus is provided according to an embodiment of the present disclosure, which is applied to a first device. The apparatus includes:

a processor 900, configured to read a program in a memory 920 to perform the following processes: evaluating performance of a target object based on a first CSI and a second CSI, where the target object includes a target model and/or a first method; the target model includes one or more of a first model and a second model; the first method includes a method for determining and/or feeding back CSI; and the first CSI is obtained based on the first model or the second model; and

a transceiver 910, configured to receive and transmit data under the control of the processor 900.

In FIG. 9, the bus architecture may include any number of interconnected buses and bridges, and specifically, various circuits of one or more processors represented by the processor 900 and a memory represented by the memory 920 are linked together. The bus architecture may also link various other circuits, such as a peripheral device, a voltage regulator, and a power management circuit, which are well known in the art, and therefore are not further described herein. The bus interface provides an interface. The transceiver 910 may be a plurality of elements, that is, includes a transmitter and a receiver, and provides units for communicating with various other apparatuses on a transmission medium. The processor 900 is responsible for managing the bus architecture and general processing, and the memory 920 may store data used by the processor 900 when performing operations.

The processor 900 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor 900 is responsible for managing the bus architecture and general processing, and the memory 920 may store data used by the processor 900 when performing operations.

Optionally, a manner of obtaining the second CSI is different from a manner of obtaining the first CSI.

Optionally, the first method includes one or more of the following:

a method for determining the first CSI or the second CSI;

a method for determining and/or feeding back CSI based on the first CSI or the second CSI;

a method for determining and/or feeding back CSI based on the first model;

a method for determining and/or feeding back CSI based on the second model;

a method for determining and/or feeding back a third CSI corresponding to the first CSI.

Optionally, the processor 900 is further configured to read the program to perform the following steps:

evaluating the performance of the target object based on a first metric corresponding to the first CSI and a second metric corresponding to the second CSI; or

evaluating the performance of the target object based on a third metric corresponding to the target model.

Optionally, the processor 900 is further configured to read the program to perform the following steps: evaluating the performance of the target object based on a relative relationship between the first metric and the second metric, where the relative relationship includes one or more of the following:

a size relationship between the first metric and the second metric;

a proportional relationship between the first metric and the second metric;

a difference between the first metric and the second metric or an absolute value of the difference.

Optionally, the first metric and the second metric are performance metrics of a same type, and the performance metrics include one or more of the following:

an accuracy metric;

a system performance metric;

an metric corresponding to distribution;

an metric related to a channel quality.

Optionally, the processor 900 is further configured to read the program to perform the following steps:

evaluating whether the target object fails;

evaluating whether the target object is available;

evaluating relative performance between the target object and at least one other object.

Optionally, the processor 900 is further configured to read the program to perform the following steps:

evaluating whether the performance of the target model is superior to at least one other model;

evaluating a model with an optimal performance from the target model and the at least one other model;

evaluating whether the performance of the first method is superior to at least one other method for determining and/or feeding back CSI;

determining through evaluation a method with an optimal performance from the first method and at least one other method for determining and/or feeding back CSI.

Optionally, the second CSI is obtained based on a third model, or the second CSI is obtained based on a second method; the third model is different from the first model and the second model, and the second method is different from the first method.

Optionally, that the second CSI is obtained based on the second method includes one or more of the following:

the second CSI is original channel information obtained based on channel estimation, or information obtained by processing the original channel information;

the second CSI is CSI obtained based on a codebook.

Optionally, the third model includes one or more of the following: a reference model; a generalization model.

Optionally, the reference model includes: a reference model whose generalization meets first requirement.

Optionally, the first CSI and the second CSI are obtained based on same target channel information; or the first CSI and the second CSI are obtained based on different target channel information.

Optionally, the processor 900 is further configured to read the program to perform the following steps: obtaining the third metric of the target object based on the first CSI and the second CSI; and evaluating the performance of the target object based on the third metric.

Optionally, the processor 900 is further configured to read the program to perform the following steps: evaluating the performance of the target object based on a relative relationship between the third metric and a preset threshold.

Optionally, that the first CSI is obtained based on the first model includes: that the first CSI is obtained based on the first model and the second CSI; or that the first CSI is obtained based on the second model includes: that the first CSI is obtained based on the second model and the second CSI.

Optionally, the target model is preset in the first device and/or a second device.

Optionally, the first device includes a terminal, and the processor 900 is further configured to read the program and perform the following steps:

receiving a first reference signal transmitted by a network device, obtaining the target channel information based on the first reference signal, and determining the first CSI and the second CSI based on the target channel information; or

receiving the target channel information transmitted by a network device, and determining the first CSI and the second CSI based on the target channel information; or

receiving a first reference signal and a second reference signal transmitted by a network device; determining first target channel information based on the first reference signal, determining second target channel information based on the second reference channel, determining the first CSI based on the first target channel information, and determining the second CSI based on the second target channel information, where the target channel information includes the first target channel information and the second target channel information; or

receiving first target channel information and second target channel information transmitted by a network device, determining the first CSI based on the first target channel information, and determining the second CSI based on the second target channel information, where the target channel information includes the first target channel information and the second target channel information.

Optionally, the first device includes a terminal, and the processor 900 is further configured to read the program and perform the following steps:

receiving first indication information transmitted by a network device, where the first indication information is used to instruct the terminal to transmit first CSI feedback information corresponding to the first CSI and second CSI feedback information corresponding to the second CSI; and

transmitting the first CSI feedback information and the second CSI feedback information to the network device in response to the first indication information.

Optionally, the first device includes a terminal, and the processor 900 is further configured to read the program and perform the following steps: transmitting the first CSI and/or the second CSI to a third device.

Optionally, the first device includes a terminal, and the processor 900 is further configured to read the program and perform the following steps: obtaining a third CSI based on one of the first model and the second model and based on the second CSI; and obtaining the first CSI based on the third CSI.

Optionally, the processor 900 is further configured to read the program to perform the following steps: transmitting the third CSI to a network device, and receiving the first CSI corresponding to the third CSI and transmitted by the network device; or

obtaining the first CSI based on the third CSI and the first model; or
obtaining the first CSI based on the third CSI and the second model.

Optionally, the processor 900 is further configured to read the program to perform the following steps: obtaining a third metric of the target model based on the first CSI and the third CSI.

Optionally, the first device includes a terminal, and the processor 900 is further configured to read the program and perform the following steps:

transmitting the second CSI and the third CSI to a network device; or
transmitting the first CSI and the second CSI to a network device; or
transmitting the first CSI, the second CSI, and the third CSI to a network device.

Optionally, the first device includes a network device, and the processor 900 is further configured to read the program and perform the following steps:

transmitting a first reference signal to a terminal, where the first reference signal is used to determine the target channel information; or

transmitting the target channel information to a terminal; or

transmitting a first reference signal and a second reference signal to a terminal, where the first reference signal and the second reference signal are respectively used to determine first target channel information and second target channel information, and the target channel information includes the first target channel information and the second target channel information; or

transmitting the first target channel information and the second target channel information to a terminal, where the target channel information includes the first target channel information and the second target channel information.

Optionally, the first device includes a network device, and the processor 900 is further configured to read the program and perform the following steps:

transmitting first indication information to a terminal, where the first indication information is used to instruct the terminal to transmit first CSI feedback information corresponding to the first CSI and second CSI feedback information corresponding to the second CSI;
obtaining first target channel information based on the first CSI feedback information, and obtaining the first CSI based on the first target channel information; and
obtaining second target channel information based on the second CSI feedback information, and obtaining the second CSI based on the second target channel information;
where the target channel information includes the first target channel information and the second target channel information.

Optionally, the first target channel information is channel information corresponding to a first reference signal transmitted to the terminal, or the first target channel information is channel information obtained by the network device based on an uplink reference signal; or the second target channel information is channel information corresponding to a second reference signal transmitted to the terminal, or the second target channel information is channel information obtained by the network device based on an uplink reference signal.

Optionally, the first device includes a network device, and the processor 900 is further configured to read the program and perform the following steps: receiving a third CSI transmitted by a terminal; and transmitting the first CSI to the terminal, where the first CSI is obtained based on one of the first model and the second model and based on the third CSI.

Optionally, the first device includes a network device, and the processor 900 is further configured to read the program and perform the following steps:

receiving the second CSI and a third CSI transmitted by a terminal, and generating the first CSI based on one of the first model and the second model and based on the third CSI; or
receiving the first CSI and the second CSI transmitted by a terminal; or
receiving the first CSI, the second CSI, and the third CSI transmitted by a terminal.

Optionally, the first device includes a network device, and the processor 900 is further configured to read the program and perform the following steps: transmitting the first CSI and/or the second CSI to a third device.

Optionally, the first device includes a third device, and the processor 900 is further configured to read the program and perform the following steps:

receiving the first CSI and the second CSI transmitted by a terminal; or
receiving the first CSI and the second CSI transmitted by a network device; or
receiving the first CSI transmitted by a terminal, and receiving the second CSI transmitted by a network device.

Optionally, the first device includes a third-party device, and the processor 900 is further configured to read the program and perform the following steps:

receiving the first CSI and the second CSI transmitted by a terminal; or
receiving the first CSI and the second CSI transmitted by a network device; or
receiving the first CSI transmitted by a network device, and receiving the second CSI transmitted by a terminal.

Optionally, the processor 900 is further configured to read the program to perform the following steps: generating a performance report of the target object; and transmitting the performance report to a second device.

Optionally, the processor 900 is further configured to read the program to perform the following steps: evaluating performance of one or more of the first model and at least one other model based on the first metric corresponding to the first CSI and an metric corresponding to the at least one other object.

Optionally, in a case that the first device includes a network device or a third device, the processor 900 is further configured to read the program to perform the following steps: performing one or more of the following based on an evaluation result of the target object: activation of a model, deactivation of the model, switching of the model, fallback of the model, selection of the model.

It should be noted that the above apparatus provided in the embodiment of the present disclosure can implement all method steps implemented in the above method embodiments, and can achieve the same technical effects. Therefore, the description and the beneficial effect of this embedment that are the same as the method embodiments will not be introduced here in detail.

As shown in FIG. 10, a performance evaluation apparatus is provided according to an embodiment of the present disclosure, which is applied to a first device, and includes:

a first processing unit 1001, configured to evaluate performance of a target object based on a first CSI and a second CSI, where the target object includes a target model and/or a first method; the target model includes one or more of a first model and a second model; the first method includes a method for determining and/or feeding back CSI; and the first CSI is obtained based on the first model or the second model.

For the first CSI, the second CSI, the first method, and a manner for obtaining the first CSI and the second CSI, reference can be made to the manner 1 described in the foregoing embodiments.

Optionally, the first processing unit includes:

a first processing subunit, configured to evaluate the performance of the target object based on a first metric corresponding to the first CSI and a second metric corresponding to the second CSI; or
a second processing subunit, configured to evaluate the performance of the target object based on a third metric corresponding to the target model.

Optionally, the first processing subunit is configured to evaluate the performance of the target object based on a relative relationship between the first metric and the second metric, where the relative relationship includes one or more of the following:

a size relationship between the first metric and the second metric;
a proportional relationship between the first metric and the second metric;
a difference between the first metric and the second metric or an absolute value of the difference.

Optionally, the first metric and the second metric are performance metrics of a same type, and the performance metrics include one or more of the following:

an accuracy metric;
a system performance metric;
an metric corresponding to distribution;
an metric related to a channel quality.

Optionally, evaluating the performance of the target model and/or the first method includes one or more of the following:

evaluating whether the target object fails;
evaluating whether the target object is available;
evaluating relative performance between the target object and at least one other object.

Optionally, the evaluating the relative performance between the target object and at least one other object includes one or more of the following:

evaluating whether the performance of the target model is superior to at least one other model;
evaluating a model with an optimal performance from the target model and the at least one other model;
evaluating whether the performance of the first method is superior to at least one other method for determining and/or feeding back CSI;
determining through evaluation a method with an optimal performance from the first method and at least one other method for determining and/or feeding back CSI.

Optionally, the first CSI and the second CSI are obtained based on same target channel information; or

the first CSI and the second CSI are obtained based on different target channel information.
Optionally, the second processing subunit includes:

a first processing module, configured to obtain the third metric of the target object based on the first CSI and the second CSI; and
a second processing module, configured to evaluate the performance of the target object based on the third metric.

Optionally, the second processing module is configured to evaluate the performance of the target object based on a relative relationship between the third metric and a preset threshold.
Optionally, the target model is preset in the first device and/or a second device.
Optionally, the first device includes a terminal, and the apparatus further includes a third processing unit, configured to:

receive a first reference signal transmitted by a network device, obtain the target channel information based on the first reference signal, determine the first CSI and the second CSI based on the target channel information; or
receive the target channel information transmitted by a network device, and determine the first CSI and the second CSI based on the target channel information; or
receive a first reference signal and a second reference signal transmitted by a network device; determine first target channel information based on the first reference signal, determine second target channel information based on the second reference channel, determine the first CSI based on the first target channel information, and determine the second CSI based on the second target channel information, where the target channel information includes the first target channel information and the second target channel information; or
receive first target channel information and second target channel information transmitted by a network device, determine the first CSI based on the first target channel information, and determine the second CSI based on the second target channel information, where the target channel information includes the first target channel information and the second target channel information.

Optionally, the first device includes a terminal, and the apparatus further includes a fourth processing unit, configured to:

receive first indication information transmitted by a network device, where the first indication information is used to instruct the terminal to transmit first CSI feedback information corresponding to the first CSI and second CSI feedback information corresponding to the second CSI; and

transmit the first CSI feedback information and the second CSI feedback information to the network device in response to the first indication information.

Optionally, the first device includes a terminal, and the apparatus further includes a first transmitting unit, configured to: transmit the first CSI and/or the second CSI to a third device.

Optionally, the first device includes a terminal, and the apparatus further includes a fifth processing unit, configured to: obtain a third CSI based on one of the first model and the second model and based on the second CSI; and obtain the first CSI based on the third CSI.

Optionally, the fifth processing unit is further configured to:

transmit the third CSI to a network device, and receiving the first CSI corresponding to the third CSI and transmitted by the network device; or obtain the first CSI based on the third CSI and the first model; or obtain the first CSI based on the third CSI and the second model.

Optionally, the first processing module is configured to obtain a third metric of the target model based on the first CSI and the third CSI.

Optionally, the first device includes a terminal, and the apparatus further includes a sixth processing unit, configured to:

transmit the second CSI and the third CSI to a network device; or transmit the first CSI and the second CSI to a network device; or transmit the first CSI, the second CSI, and the third CSI to a network device.

Optionally, the first device includes a network device, and the apparatus further includes a seventh processing unit, configured to:

transmit a first reference signal to a terminal, where the first reference signal is used to determine the target channel information; or transmit the target channel information to a terminal; or transmit a first reference signal and a second reference signal to a terminal, where the first reference signal and the second reference signal are respectively used to determine first target channel information and second target channel information, and the target channel information includes the first target channel information and the second target channel information; or

transmit the first target channel information and the second target channel information to a terminal, where the target channel information includes the first target channel information and the second target channel information.

Optionally, the first device includes a network device, and the apparatus further includes an eighth processing unit, configured to:

transmit first indication information to a terminal, where the the first indication information is used to instruct the terminal to transmit first CSI feedback information corresponding to the first CSI and second CSI feedback information corresponding to the second CSI; obtain first target channel information based on the first CSI feedback information, and obtain the first CSI based on the first target channel information; and obtain second target channel information based on the second CSI feedback information, and obtaining the second CSI based on the second target channel information, where the target channel information includes the first target channel information and the second target channel information.

Optionally, the first target channel information is channel information corresponding to a first reference signal transmitted to the terminal, or the first target channel information is channel information obtained by the network device based on an uplink reference signal; or the second target channel information is channel information corresponding to a second reference signal transmitted to the terminal, or the second target channel information is channel information obtained by the network device based on an uplink reference signal.

Optionally, the first device includes a network device, and the apparatus further includes a ninth processing unit, configured to:

receive third CSI transmitted by a terminal; and transmit the first CSI to the terminal, where the first CSI is obtained based on one of the first model and the second model and based on the third CSI.

Optionally, the first device includes a network device, and the apparatus further includes a tenth processing unit, configured to:

receive the second CSI and a third CSI transmitted by a terminal, and generate the first CSI based on one of the first model and the second model and based on the third CSI; or receive the first CSI and the second CSI transmitted by a terminal; or receive the first CSI, the second CSI, and the third CSI transmitted by a terminal.

Optionally, the first device includes a network device, and the apparatus further includes a second transmitting unit, configured to: transmit the first CSI and/or the second CSI to a third device.

Optionally, the first device includes a third device, and the apparatus further includes a first receiving unit, configured to:

receive the first CSI and the second CSI transmitted by a terminal; or
receive the first CSI and the second CSI transmitted by a network device; or
receive the first CSI transmitted by a terminal, and receive the second CSI transmitted by a network device.

Optionally, the first device includes a third-party device, and the apparatus further includes a second receiving unit, configured to:

receive the first CSI and the second CSI transmitted by a terminal; or
receive the first CSI and the second CSI transmitted by a network device; or
receive the first CSI transmitted by a network device, and receive the second CSI transmitted by a terminal.

Optionally, the apparatus further includes:

a first generating unit, configured to generate a performance report of the target object; and
a third transmitting unit, configured to transmit the performance report to a second device.

Optionally, the apparatus further includes: an eleventh processing unit, configured to evaluate performance of one or more of the target model and at least one other model based on the first metric corresponding to the first CSI and a metric corresponding to the at least one other object.

Optionally, in a case that the first device includes a network device or a third device, the apparatus further includes: a twelfth processing unit, configured to perform one or more of the following based on an evaluation result of the target object: activation of a model, deactivation of the model, switching of the model, fallback of the model, selection of the model.

It should be noted that the above apparatus provided in the embodiment of the present disclosure can implement all method steps implemented in the above method embodiments, and can achieve the same technical effects. Therefore, the part and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a communication device, including: a memory, a processor, and a program stored on the memory and executable on the processor. The processor, when executing the program, implements steps of the performance evaluation method as described above.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

It should be noted that the terms "include", "comprise", or any of their variants in this specification are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners shall fall within the protection scope of this application.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

## Claims

1. A performance evaluation method, applied to a first device, the method comprising:

    evaluating performance of a target object based on a first channel state information (CSI) and a second CSI,
    wherein the target object comprises a target model and/or a first method;
    the target model comprises one or more of a first model and a second model; the first method comprises a method for determining and/or feeding back CSI; and
    the first CSI is obtained based on the first model or the second model.

2. The method according to claim 1, wherein the first method comprises one or more of the following:

    a method for determining the first CSI or the second CSI;
    a method for determining and/or feeding back CSI based on the first CSI or the second CSI;
a method for determining and/or feeding back CSI based on the first model;
a method for determining and/or feeding back CSI based on the second model;
a method for determining and/or feeding back a third CSI corresponding to the first CSI.

3. The method according to claim 1, wherein the evaluating the performance of the target object based on the first channel state information (CSI) and the second CSI comprises:

evaluating the performance of the target object based on a first metric corresponding to the first CSI and a second metric corresponding to the second CSI; or
evaluating the performance of the target object based on a third metric corresponding to the target model.

4. The method according to claim 3, wherein the evaluating the performance of the target object based on the first metric corresponding to the first CSI and the second metric corresponding to the second CSI comprises:

evaluating the performance of the target object based on a relative relationship between the first metric and the second metric,
wherein the relative relationship comprises one or more of the following:

a size relationship between the first metric and the second metric;
a proportional relationship between the first metric and the second metric;
a difference between the first metric and the second metric or an absolute value of the difference.

5. The method according to claim 3 or 4, wherein the first metric and the second metric are performance metrics of a same type, and the performance metrics comprise one or more of the following:

an accuracy metric;
a system performance metric;
a metric corresponding to distribution;
a metric related to a channel quality.

6. The method according to claim 1, wherein the evaluating the performance of the target model and/or the first method comprises one or more of the following:

evaluating whether the target object fails;
evaluating whether the target object is available;

evaluating relative performance between the target object and at least one other object.

7. The method according to claim 6, wherein the evaluating the relative performance between the target object and the at least one other object comprises one or more of the following:

evaluating whether the performance of the target model is superior to at least one other model;
evaluating a model with an optimal performance from the target model and the at least one other model;
evaluating whether the performance of the first method is superior to at least one other method for determining and/or feeding back CSI;
determining through evaluation a method with an optimal performance from the first method and at least one other method for determining and/or feeding back CSI.

8. The method according to claim 1, wherein the second CSI is obtained based on a third model, or the second CSI is obtained based on a second method; the third model is different from the first model and the second model, and the second method is different from the first method.

9. The method according to claim 8, wherein that the second CSI is obtained based on the second method comprises one or more of the following:

the second CSI is original channel information obtained based on channel estimation, or information obtained by processing the original channel information;
the second CSI is CSI obtained based on a codebook.

10. The method according to claim 8, wherein the third model comprises one or more of the following:

a reference model;
a generalization model.

11. The method according to claim 10, wherein the reference model comprises:
a reference model whose generalization meets first requirement.

12. The method according to claim 1, wherein the first CSI and the second CSI are obtained based on same target channel information; or
the first CSI and the second CSI are obtained based on different target channel information.

13. The method according to claim 3, wherein the evaluating the performance of the target object based on the third metric of the target model comprises:

obtaining the third metric of the target object based on the first CSI and the second CSI; and evaluating the performance of the target object based on the third metric.

14. The method according to claim 13, wherein the evaluating the performance of the target object based on the third metric comprises:
evaluating the performance of the target object based on a relative relationship between the third metric and a preset threshold.

15. The method according to claim 13 or 14, wherein that the first CSI is obtained based on the first model comprises: that the first CSI is obtained based on the first model and the second CSI; or
that the first CSI is obtained based on the second model comprises: that the first CSI is obtained based on the second model and the second CSI.

16. The method according to claim 1, wherein the target model is preset in the first device and/or a second device.

17. The method according to claim 12, wherein the first device comprises a terminal, and the method further comprises:

receiving a first reference signal transmitted by a network device, obtaining the target channel information based on the first reference signal, and determining the first CSI and the second CSI based on the target channel information; or
receiving the target channel information transmitted by a network device, and determining the first CSI and the second CSI based on the target channel information; or
receiving a first reference signal and a second reference signal transmitted by a network device, determining first target channel information based on the first reference signal, determining second target channel information based on the second reference channel, determining the first CSI based on the first target channel information, and determining the second CSI based on the second target channel information, wherein the target channel information comprises the first target channel information and the second target channel information; or
receiving first target channel information and second target channel information transmitted by a network device, determining the first CSI based on the first target channel information, and determining the second CSI based on the second target channel information, wherein the target channel information comprises the first target channel information and the second target channel information.

18. The method according to claim 12, wherein the first device comprises a terminal, and the method further comprises:

receiving first indication information transmitted by a network device, wherein the first indication information is used to instruct the terminal to transmit first CSI feedback information corresponding to the first CSI and second CSI feedback information corresponding to the second CSI; and
transmitting the first CSI feedback information and the second CSI feedback information to the network device in response to the first indication information.

19. The method according to claim 1, wherein the first device comprises a terminal, and the method further comprises:
transmitting the first CSI and/or the second CSI to a third device.

20. The method according to claim 13, wherein the first device comprises a terminal, and the method further comprises:

obtaining a third CSI based on one of the first model and the second model and based on the second CSI; and
obtaining the first CSI based on the third CSI.

21. The method according to claim 20, wherein the obtaining the first CSI based on the third CSI comprises:

transmitting the third CSI to a network device, and receiving the first CSI corresponding to the third CSI and transmitted by the network device; or
obtaining the first CSI based on the third CSI and the first model; or
obtaining the first CSI based on the third CSI and the second model.

22. The method according to claim 20 or 21, wherein the obtaining a third metric of the target model based on the first CSI and the second CSI comprises:
obtaining a third metric of the target model based on the first CSI and the third CSI.

23. The method according to claim 13, wherein the first device comprises a terminal, and the method further comprises:

transmitting the second CSI and a third CSI to a network device; or

transmitting the first CSI and the second CSI to a network device; or

transmitting the first CSI, the second CSI, and the third CSI to a network device.

24. The method according to claim 12, wherein the first device comprises a network device, and the method further comprises:

transmitting a first reference signal to a terminal, wherein the first reference signal is used to determine the target channel information; or transmitting the target channel information to a terminal; or transmitting a first reference signal and a second reference signal to a terminal, wherein the first reference signal and the second reference signal are respectively used to determine first target channel information and second target channel information, and the target channel information comprises the first target channel information and the second target channel information; or transmitting the first target channel information and the second target channel information to a terminal, wherein the target channel information comprises the first target channel information and the second target channel information.

25. The method according to claim 12, wherein the first device comprises a network device, and the method further comprises:

transmitting first indication information to a terminal, wherein the the first indication information is used to instruct the terminal to transmit first CSI feedback information corresponding to the first CSI and second CSI feedback information corresponding to the second CSI; obtaining first target channel information based on the first CSI feedback information, and obtaining the first CSI based on the first target channel information; and obtaining second target channel information based on the second CSI feedback information, and obtaining the second CSI based on the second target channel information, wherein the target channel information comprises the first target channel information and the second target channel information.

26. The method according to claim 25, wherein the first target channel information is channel information corresponding to a first reference signal transmitted to the terminal, or the first target channel information is channel information obtained by the network device based on an uplink reference signal; or

the second target channel information is channel information corresponding to a second reference signal transmitted to the terminal, or the second target channel information is channel information obtained by the network device based on an uplink reference signal.

27. The method according to claim 13, wherein the first device comprises a network device, and the method further comprises:

receiving a third CSI transmitted by a terminal; and transmitting the first CSI to the terminal, wherein the first CSI is obtained based on one of the first model and the second model and based on the third CSI.

28. The method according to claim 13, wherein the first device comprises a network device, and the method further comprises:

receiving the second CSI and a third CSI transmitted by a terminal, and generating the first CSI based on one of the first model and the second model and based on the third CSI; or receiving the first CSI and the second CSI transmitted by a terminal; or receiving the first CSI, the second CSI, and the third CSI transmitted by a terminal.

29. The method according to claim 1, wherein the first device comprises a network device, and the method further comprises:
transmitting the first CSI and/or the second CSI to a third device.

30. The method according to claim 1, wherein the first device comprises a third device, and the method further comprises:

receiving the first CSI and the second CSI transmitted by a terminal; or receiving the first CSI and the second CSI transmitted by a network device; or receiving the first CSI transmitted by a terminal, and receiving the second CSI transmitted by a network device.

31. The method according to claim 1, wherein the first device comprises a third-party device, and the method further comprises:

receiving the first CSI and the second CSI transmitted by a terminal; or receiving the first CSI and the second CSI transmitted by a network device; or receiving the first CSI transmitted by a network device, and receiving the second CSI transmitted by a terminal.

32. The method according to claim 1, further comprising:

    generating a performance report of the target object; and
    transmitting the performance report to a second device.

33. The method according to claim 1, further comprising: evaluating performance of one or more of the target object and at least one other object based on a first metric corresponding to the first CSI and a metric corresponding to the at least one other object.

34. The method according to claim 1, wherein in a case that the first device comprises a network device or a third device, the method further comprises performing one or more of the following based on an evaluation result of the target object: activation of a model, deactivation of the model, switching of the model, fallback of the model, selection of the model.

35. A performance evaluation apparatus, applied to a first device, the apparatus comprising:

    a first processing unit, configured to evaluate performance of a target object based on a first CSI and a second CSI, wherein the target object comprises a target model and/or a first method; the target model comprises one or more of a first model and a second model; the first method comprises a method for determining and/or feeding back CSI; and the first CSI is obtained based on the first model or the second model.

36. The apparatus according to claim 35, wherein the first method includes one or more of the following:

    a method for determining the first CSI or the second CSI;
    a method for determining and/or feeding back CSI based on the first CSI or the second CSI;
    a method for determining and/or feeding back CSI based on the first model;
    a method for determining and/or feeding back CSI based on the second model;
    a method for determining and/or feeding back a third CSI corresponding to the first CSI.

37. The apparatus according to claim 35, wherein the first processing unit comprises:

    a first processing subunit, configured to evaluate the performance of the target object based on a first metric corresponding to the first CSI and a second metric corresponding to the second CSI; or
a second processing subunit, configured to evaluate the performance of the target object based on a third metric corresponding to the target model.

38. The apparatus according to claim 37, wherein the first processing subunit is configured to evaluate the performance of the target object based on a relative relationship between the first metric and the second metric,
wherein the relative relationship comprises one or more of the following:

    a size relationship between the first metric and the second metric;
    a proportional relationship between the first metric and the second metric;
    a difference between the first metric and the second metric or an absolute value of the difference.

39. The apparatus according to claim 37 or 38, wherein the first metric and the second metric are performance metrics of a same type, and the performance metrics comprise one or more of the following:

    an accuracy metric;
    a system performance metric;
    a metric corresponding to distribution;
    a metric related to a channel quality.

40. The apparatus according to claim 35, wherein the evaluating the performance of the target model and/or the first method comprises one or more of the following:

    evaluating whether the target object fails;
    evaluating whether the target object is available;
    evaluating relative performance between the target object and at least one other object.

41. The apparatus according to claim 40, wherein the evaluating the relative performance between the target object and at least one other object comprises one or more of the following:

    evaluating whether the performance of the target model is superior to at least one other model;
    evaluating a model with an optimal performance from the target model and the at least one other model;
    evaluating whether the performance of the first method is superior to at least one other method for determining and/or feeding back CSI;

determining through evaluation a method with an optimal performance from the first method and at least one other method for determining and/or feeding back CSI.

42. The apparatus according to claim 35, wherein the second CSI is obtained based on a third model, or the second CSI is obtained based on a second method; the third model is different from the first model and the second model, and the second method is different from the first method.

43. The apparatus according to claim 42, wherein that the second CSI is obtained based on the second method comprises one or more of the following:

the second CSI is original channel information obtained based on channel estimation, or information obtained by processing the original channel information;
the second CSI is CSI obtained based on a codebook.

44. The apparatus according to claim 42, wherein the third model comprises one or more of the following:

a reference model;
a generalization model.

45. The apparatus according to claim 44, wherein the reference model comprises:
a reference model whose generalization meets first requirement.

46. The apparatus according to claim 35, wherein the first CSI and the second CSI are obtained based on same target channel information; or
the first CSI and the second CSI are obtained based on different target channel information.

47. The apparatus according to claim 37, wherein the second processing subunit comprises:

a first processing module, configured to obtain the third metric of the target object based on the first CSI and the second CSI; and
a second processing module, configured to evaluate the performance of the target object based on the third metric.

48. The apparatus according to claim 47, wherein the second processing module is configured to evaluate the performance of the target object based on a relative relationship between the third metric and a preset threshold.

49. The apparatus according to claim 47 or 48, wherein that the first CSI is obtained based on the first model comprises: that the first CSI is obtained based on the first model and the second CSI; or
that the first CSI is obtained based on the second model comprises: that the first CSI is obtained based on the second model and the second CSI.

50. The apparatus according to claim 35, wherein the target model is preset in the first device and/or a second device.

51. The apparatus according to claim 46, wherein the first device comprises a terminal, and the apparatus further comprises a third processing unit, configured to:

receive a first reference signal transmitted by a network device, obtain the target channel information based on the first reference signal, and determine the first CSI and the second CSI based on the target channel information; or
receive the target channel information transmitted by a network device, and determine the first CSI and the second CSI based on the target channel information; or
receive a first reference signal and a second reference signal transmitted by a network device; determine first target channel information based on the first reference signal, determine second target channel information based on the second reference channel, determine the first CSI based on the first target channel information, and determine the second CSI based on the second target channel information, wherein the target channel information comprises the first target channel information and the second target channel information; or
receive first target channel information and second target channel information transmitted by a network device, determine the first CSI based on the first target channel information, and determine the second CSI based on the second target channel information, wherein the target channel information comprises the first target channel information and the second target channel information.

52. The apparatus according to claim 46, wherein the first device comprises a terminal, and the apparatus further comprises a fourth processing unit, configured to:

receive first indication information transmitted by a network device, wherein the the first indication information is used to instruct the terminal to transmit first CSI feedback information corresponding to the first CSI and second CSI feedback information corresponding to the second CSI; and

transmit the first CSI feedback information and the second CSI feedback information to the network device in response to the first indication information.

53. The apparatus according to claim 35, wherein the first device includes a terminal, and the apparatus further includes a first transmitting unit, configured to:

transmit the first CSI and/or the second CSI to a third device.

54. The apparatus according to claim 47, wherein the first device includes a terminal, and the apparatus further includes a fifth processing unit, configured to:

obtain a third CSI based on one of the first model and the second model and based on the second CSI; and
obtain the first CSI based on the third CSI.

55. The apparatus according to claim 54, wherein the fifth processing unit is further configured to:

transmit the third CSI to a network device, and receiving the first CSI corresponding to the third CSI and transmitted by the network device; or
obtain the first CSI based on the third CSI and the first model; or
obtain the first CSI based on the third CSI and the second model.

56. The apparatus according to claim 54 or 55, wherein the first processing module is configured to obtain a third metric of the target model based on the first CSI and the third CSI.

57. The apparatus according to claim 47, wherein the first device includes a terminal, and the apparatus further includes a sixth processing unit, configured to:

transmit the second CSI and the third CSI to a network device; or
transmit the first CSI and the second CSI to a network device; or
transmit the first CSI, the second CSI, and the third CSI to a network device.

58. The apparatus according to claim 46, wherein the first device includes a network device, and the apparatus further includes a seventh processing unit, configured to:

transmit a first reference signal to a terminal, wherein the first reference signal is used to determine the target channel information; or
transmit the target channel information to a terminal; or
transmit a first reference signal and a second reference signal to a terminal, wherein the first reference signal and the second reference signal are respectively used to determine first target channel information and second target channel information, and the target channel information comprises the first target channel information and the second target channel information; or
transmit the first target channel information and the second target channel information to a terminal, wherein the target channel information comprises the first target channel information and the second target channel information.

59. The apparatus according to claim 46, wherein the first device includes a network device, and the apparatus further includes an eighth processing unit, configured to:

transmit first indication information to a terminal, wherein the the first indication information is used to instruct the terminal to transmit first CSI feedback information corresponding to the first CSI and second CSI feedback information corresponding to the second CSI;
obtain first target channel information based on the first CSI feedback information, and obtain the first CSI based on the first target channel information; and
obtain second target channel information based on the second CSI feedback information, and obtaining the second CSI based on the second target channel information,
wherein the target channel information comprises the first target channel information and the second target channel information.

60. The apparatus according to claim 59, wherein the first target channel information is channel information corresponding to a first reference signal transmitted to the terminal, or the first target channel information is channel information obtained by the network device based on an uplink reference signal; or
the second target channel information is channel information corresponding to a second reference signal transmitted to the terminal, or the second target channel information is channel information obtained by the network device based on an uplink reference signal.

61. The apparatus according to claim 47, wherein the first device includes a network device, and the apparatus further includes a ninth processing unit, configured to:

receive third CSI transmitted by a terminal; and transmit the first CSI to the terminal, wherein the first CSI is obtained based on one of the first model and the second model and based on the third CSI.

62. The apparatus according to claim 47, wherein the first device includes a network device, and the apparatus further includes a tenth processing unit, configured to:

receive the second CSI and a third CSI transmitted by a terminal, and generate the first CSI based on one of the first model and the second model and based on the third CSI; or
receive the first CSI and the second CSI transmitted by a terminal; or
receive the first CSI, the second CSI, and the third CSI transmitted by a terminal.

63. The apparatus according to claim 35, wherein the first device includes a network device, and the apparatus further includes a second transmitting unit, configured to:
transmit the first CSI and/or the second CSI to a third device.

64. The apparatus according to claim 35, wherein the first device includes a third device, and the apparatus further includes a first receiving unit, configured to:

receive the first CSI and the second CSI transmitted by a terminal; or
receive the first CSI and the second CSI transmitted by a network device; or
receive the first CSI transmitted by a terminal, and receive the second CSI transmitted by a network device.

65. The apparatus according to claim 35, wherein the first device comprises a third-party device, and the apparatus further comprises a second receiving unit, configured to:

receive the first CSI and the second CSI transmitted by a terminal; or
receive the first CSI and the second CSI transmitted by a network device; or
receive the first CSI transmitted by a network device, and receive the second CSI transmitted by a terminal.

66. The apparatus according to claim 35, further comprising:

a first generating unit, configured to generate a performance report of the target object; and
a third transmitting unit, configured to transmit the performance report to a second device.

67. The apparatus according to claim 35, further comprising:
an eleventh processing unit, configured to evaluate performance of one or more of the first model and at least one other model based on the first metric corresponding to the first CSI and a metric corresponding to the at least one other object.

68. The apparatus according to claim 35, wherein in a case that the first device includes a network device or a third device, the apparatus further includes: a twelfth processing unit, configured to perform one or more of the following based on an evaluation result of the target object:
activation of a model, deactivation of the model, switching of the model, fallback of the model, selection of the model.

69. A performance evaluation apparatus, applied to a first device, comprising:

a memory, a transceiver and a processor, wherein the memory is configured to store a computer program; the transceiver is configured to transmit and receive data under control of the processor; and the processor is configured to read the computer program in the memory to perform the following operations:

evaluating performance of a target object based on a first CSI and a second CSI, wherein the target object comprises a target model and/or a first method;
the target model comprises one or more of a first model and a second model;

the first method comprises a method for determining and/or feeding back CSI; and
the first CSI is obtained based on the first model or the second model.

70. The apparatus according to claim 69, wherein the first method comprises one or more of the following:

a method for determining the first CSI or the second CSI;
a method for determining and/or feeding back CSI based on the first CSI or the second CSI;
a method for determining and/or feeding back CSI based on the first model;
a method for determining and/or feeding back CSI based on the second model;
a method for determining and/or feeding back a third CSI corresponding to the first CSI.

71. The apparatus according to claim 69, wherein the processor is further configured to read the program to perform the following steps:

evaluating the performance of the target object based on a first metric corresponding to the first CSI and a second metric corresponding to the second CSI; or

evaluating the performance of the target object based on a third metric corresponding to the target model.

72. The apparatus according to claim 69, wherein the processor is further configured to read the program to perform the following steps:

evaluating the performance of the target object based on a relative relationship between the first metric and the second metric,

wherein the relative relationship comprises one or more of the following:

a size relationship between the first metric and the second metric;

a proportional relationship between the first metric and the second metric;

a difference between the first metric and the second metric or an absolute value of the difference.

73. The apparatus according to claim 71 or 72, wherein the first metric and the second metric are performance metrics of a same type, and the performance metrics comprise one or more of the following:

an accuracy metric;

a system performance metric;

a metric corresponding to distribution;

a metric related to a channel quality.

74. The apparatus according to claim 69, wherein the processor is further configured to read the program to perform the following steps:

evaluating whether the target object fails;

evaluating whether the target object is available;

evaluating relative performance between the target object and at least one other object.

75. The apparatus according to claim 74, wherein the processor is further configured to read the program to perform the following steps:

evaluating whether the performance of the target model is superior to at least one other model;

evaluating a model with an optimal performance from the target model and the at least one other model;

evaluating whether the performance of the first method is superior to at least one other method for determining and/or feeding back CSI;

determining through evaluation a method with an optimal performance from the first method and at least one other method for determining and/or feeding back CSI.

76. The apparatus according to claim 69, wherein the second CSI is obtained based on a third model, or the second CSI is obtained based on a second method; the third model is different from the first model and the second model, and the second method is different from the first method.

77. The apparatus according to claim 76, wherein that the second CSI is obtained based on the second method comprises one or more of the following:

the second CSI is original channel information obtained based on channel estimation, or information obtained by processing the original channel information;

the second CSI is CSI obtained based on a codebook.

78. The apparatus according to claim 76, wherein the third model comprises one or more of the following:

a reference model;

a generalization model.

79. The apparatus according to claim 78, wherein the reference model comprises:
a reference model whose generalization meets first requirement.

80. The apparatus according to claim 69, wherein the first CSI and the second CSI are obtained based on same target channel information; or the first CSI and the second CSI are obtained based on different target channel information.

81. The apparatus according to claim 71, wherein the processor is further configured to read the program to perform the following steps:

obtaining the third metric of the target object based on the first CSI and the second CSI; and

evaluating the performance of the target object based on the third metric.

82. The apparatus according to claim 71, wherein the processor is further configured to read the program to perform the following steps:
evaluating the performance of the target object based on a relative relationship between the third metric and a preset threshold.

**83.** The apparatus according to claim 81 or 82, wherein that the first CSI is obtained based on the first model comprises: that the first CSI is obtained based on the first model and the second CSI; or that the first CSI is obtained based on the second model comprises: that the first CSI is obtained based on the second model and the second CSI.

**84.** The apparatus according to claim 69, wherein the target model is preset in the first device and/or a second device.

**85.** The apparatus according to claim 80, wherein the first device comprises a terminal, and the processor is further configured to read the program and perform the following steps:

receiving a first reference signal transmitted by a network device, obtaining the target channel information based on the first reference signal, and determining the first CSI and the second CSI based on the target channel information; or receiving the target channel information transmitted by a network device, and determining the first CSI and the second CSI based on the target channel information; or receiving a first reference signal and a second reference signal transmitted by a network device, determining first target channel information based on the first reference signal, determining second target channel information based on the second reference channel, determining the first CSI based on the first target channel information, and determining the second CSI based on the second target channel information, wherein the target channel information comprises the first target channel information and the second target channel information; or receiving first target channel information and second target channel information transmitted by a network device, determining the first CSI based on the first target channel information, and determining the second CSI based on the second target channel information, wherein the target channel information comprises the first target channel information and the second target channel information.

**86.** The apparatus according to claim 80, wherein the first device comprises a terminal, and the processor is further configured to read the program and perform the following steps:

receiving first indication information transmitted by a network device, wherein the the first indication information is used to instruct the terminal to transmit first CSI feedback information corresponding to the first CSI and second CSI feedback information corresponding to the second CSI; and transmitting the first CSI feedback information and the second CSI feedback information to the network device in response to the first indication information.

**87.** The apparatus according to claim 69, wherein the first device comprises a terminal, and the processor is further configured to read the program and perform the following steps: transmitting the first CSI and/or the second CSI to a third device.

**88.** The apparatus according to claim 81, wherein the first device comprises a terminal, and the processor is further configured to read the program and perform the following steps:

obtaining a third CSI based on one of the first model and the second model and based on the second CSI; and obtaining the first CSI based on the third CSI.

**89.** The apparatus according to claim 88, wherein the processor is further configured to read the program to perform the following steps:

transmitting the third CSI to a network device, and receiving the first CSI corresponding to the third CSI and transmitted by the network device; or obtaining the first CSI based on the third CSI and the first model; or obtaining the first CSI based on the third CSI and the second model.

**90.** The apparatus according to claim 88 or 89, wherein the processor is further configured to read the program to perform the following steps: obtaining a third metric of the target model based on the first CSI and the third CSI.

**91.** The apparatus according to claim 81, wherein the first device comprises a terminal, and the processor is further configured to read the program and perform the following steps:

transmitting the second CSI and the third CSI to a network device; or transmitting the first CSI and the second CSI to a network device; or transmitting the first CSI, the second CSI, and the third CSI to a network device.

**92.** The apparatus according to claim 80, wherein the first device comprises a network device, and the processor is further configured to read the program and perform the following steps:

transmitting a first reference signal to a terminal, wherein the first reference signal is used to determine the target channel information; or transmitting the target channel information to a terminal; or transmitting a first reference signal and a second reference signal to a terminal, wherein the first reference signal and the second reference signal are respectively used to determine first target channel information and second target channel information, and the target channel information comprises the first target channel information and the second target channel information; or transmitting the first target channel information and the second target channel information to a terminal, wherein the target channel information comprises the first target channel information and the second target channel information.

93. The apparatus according to claim 80, wherein the first device comprises a network device, and the processor is further configured to read the program and perform the following steps:

transmitting first indication information to a terminal, wherein the the first indication information is used to instruct the terminal to transmit first CSI feedback information corresponding to the first CSI and second CSI feedback information corresponding to the second CSI; obtaining first target channel information based on the first CSI feedback information, and obtaining the first CSI based on the first target channel information; and obtaining second target channel information based on the second CSI feedback information, and obtaining the second CSI based on the second target channel information, wherein the target channel information comprises the first target channel information and the second target channel information.

94. The apparatus according to claim 93, wherein the first target channel information is channel information corresponding to a first reference signal transmitted to the terminal, or the first target channel information is channel information obtained by the network device based on an uplink reference signal; or the second target channel information is channel information corresponding to a second reference signal transmitted to the terminal, or the second target channel information is channel information obtained by the network device based on an uplink reference signal.

95. The apparatus according to claim 81, wherein the first device comprises a network device, and the processor is further configured to read the program and perform the following steps:

receiving a third CSI transmitted by a terminal; and transmitting the first CSI to the terminal, wherein the first CSI is obtained based on one of the first model and the second model and based on the third CSI.

96. The apparatus according to claim 81, wherein the first device comprises a network device, and the processor is further configured to read the program and perform the following steps:

receiving the second CSI and a third CSI transmitted by a terminal, and generating the first CSI based on one of the first model and the second model and based on the third CSI; or receiving the first CSI and the second CSI transmitted by a terminal; or receiving the first CSI, the second CSI, and the third CSI transmitted by a terminal.

97. The apparatus according to claim 69, wherein the first device comprises a network device, and the processor is further configured to read the program and perform the following steps: transmitting the first CSI and/or the second CSI to a third device.

98. The apparatus according to claim 69, wherein the first device comprises a third device, and the processor is further configured to read the program and perform the following steps:

receiving the first CSI and the second CSI transmitted by a terminal; or receiving the first CSI and the second CSI transmitted by a network device; or receiving the first CSI transmitted by a terminal, and receiving the second CSI transmitted by a network device.

99. The apparatus according to claim 69, wherein the first device comprises a third-party device, and the processor is further configured to read the program and perform the following steps:

receiving the first CSI and the second CSI transmitted by a terminal; or receiving the first CSI and the second CSI transmitted by a network device; or receiving the first CSI transmitted by a network device, and receiving the second CSI transmitted by a terminal.

**100.**
The apparatus according to claim 69, wherein the processor is further configured to read the program to perform the following steps:

> generating a performance report of the target object; and
> transmitting the performance report to a second device.

**101.**
The apparatus according to claim 69, wherein the processor is further configured to read the program to perform the following steps:
evaluating performance of one or more of the target object and at least one other object based on the first metric corresponding to the first CSI and a metric corresponding to the at least one other object.

**102.**
The apparatus according to claim 69, wherein in a case that the first device includes a network device or a third device, the processor is further configured to read the program to perform the following steps:
performing one or more of the following based on an evaluation result of the target object: activation of a model, deactivation of the model, switching of the model, fallback of the model, selection of the model.

**103.**
A processor-readable storage medium, wherein the processor-readable storage medium stores a computer program, and the computer program is configured to cause the processor to perform the method according to any one of claims 1 to 34.

start

evaluating performance of a target object based on a first CSI and a second CSI ⟋ 101

end

FIG. 1

terminal side

CSI-RS → channel estimation ⊢H▸ preprocess ⊢X▸ AI/ML generate → quantize

CSI feedback

Y

network device side

postprocess ◂Z⊣ AI/ML reconstruct ← dequantize ◂

FIG. 2

start

obtaining a first CSI and a second CSI ⟋ 301

evaluating performance of a target object based on the first CSI and the second CSI ⟋ 302

end

FIG. 3

```
                    ┌─────────┐
                    │  start  │
                    └────┬────┘
                         │
                         ▼
   ┌─────────────────────────────────────────────────┐      401
   │      sending first indication information to a terminal   │
   └─────────────────────────┬───────────────────────┘
                             │
                             ▼
   ┌─────────────────────────────────────────────────┐      402
   │          obtaining a first CSI and a second CSI          │
   └─────────────────────────┬───────────────────────┘
                             │
                             ▼
   ┌─────────────────────────────────────────────────┐      403
   │  evaluating performance of the target object based on the first  │
   │               CSI and the second CSI                │
   └─────────────────────────┬───────────────────────┘
                             │
                             ▼
                       ┌─────────┐
                       │   end   │
                       └─────────┘
```

FIG. 4

```
                    ┌─────────┐
                    │  start  │
                    └────┬────┘
                         │
                         ▼
   ┌─────────────────────────────────────────────────┐      501
   │          obtaining a first CSI and a second CSI          │
   └─────────────────────────┬───────────────────────┘
                             │
                             ▼
   ┌─────────────────────────────────────────────────┐      502
   │  evaluating performance of a target object based on a first CSI  │
   │               and a second CSI                  │
   └─────────────────────────┬───────────────────────┘
                             │
                             ▼
                       ┌─────────┐
                       │   end   │
                       └─────────┘
```

FIG. 5

start

obtaining a first CSI and a second CSI — 601

evaluating performance of the target object based on the first CSI and the second CSI — 602

end

FIG. 6

start

obtaining a first CSI and a second CSI — 701

evaluating performance of a target object based on the first CSI and the second CSI — 702

end

FIG. 7

start

obtaining a first CSI and a second CSI — 801

evaluating performance of a target object based on the first CSI and the second CSI — 802

end

FIG. 8

— 900

processor

bus interface

— 920

memory

— 910

transceiver

FIG. 9

performance evaluation apparatus

first processing unit — 1001

FIG. 10

## INTERNATIONAL SEARCH REPORT

| International application No. |
| --- |
| **PCT/CN2024/074373** |

| | |
| --- | --- |
| **A.** | **CLASSIFICATION OF SUBJECT MATTER** |
| | H04L5/00(2006.01)i; H04B17/391(2015.01)i; H04B7/04(2017.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC: H04L5/-, H04B17/-, H04B7/-

Documentation searched other than minimum documentation to the extent that such documents are included in the fields searched

Electronic data base consulted during the international search (name of data base and, where practicable, search terms used)

CNABS, CNTXT, CNKI: 信道状态, 信道信息, CSI, 模型, 反馈, 性能, 评估, 对比, 训练, 比较, 人工智能, AI, 机器学习, ML, 神经网络, NN, 码本; VEN, ENTXT, 3gpp, IEEE: channel, state, status, info+, CSI, model, feedback, performance, assess+, evaluat+, compar+, train+, artifac+, AI, machine learn+, ML, neural network, NN, codebook.

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | WO 2022257121 A1 (GUANGDONG OPPO MOBILE TELECOMMUNICATIONS CORP., LTD.) 15 December 2022 (2022-12-15)<br>description, paragraphs [55]-[127], and figures 8-12 | 1-103 |
| X | CN 113938232 A (HUAWEI TECHNOLOGIES CO., LTD.) 14 January 2022 (2022-01-14)<br>description, paragraphs [588]-[786], and figures 12-13 | 1-103 |
| X | US 2021351885 A1 (SAMSUNG ELECTRONICS CO., LTD.) 11 November 2021 (2021-11-11)<br>description, paragraphs [149]-[205] | 1-103 |
| A | WO 2022033456 A1 (HUAWEI TECHNOLOGIES CO., LTD.) 17 February 2022 (2022-02-17)<br>entire document | 1-103 |
| A | WO 2022208673 A1 (NTT DOCOMO, INC.) 06 October 2022 (2022-10-06)<br>entire document | 1-103 |

☑ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **28 March 2024** | **01 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/074373** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2023274926 A1 (TELEFONAKTIEBOLAGET LM ERICSSON (PUBL)) 05 January 2023 (2023-01-05)<br>     entire document | 1-103 |

Form PCT/ISA/210 (second sheet) (July 2022)

## INTERNATIONAL SEARCH REPORT
### Information on patent family members

International application No.

**PCT/CN2024/074373**

| Patent document cited in search report | | | Publication date (day/month/year) | Patent family member(s) | | | Publication date (day/month/year) |
|---|---|---|---|---|---|---|---|
| WO | 2022257121 | A1 | 15 December 2022 | CN | 116998115 | A | 03 November 2023 |
| CN | 113938232 | A | 14 January 2022 | WO | 2022012257 | A1 | 20 January 2022 |
| | | | | US | 2023155702 | A1 | 18 May 2023 |
| US | 2021351885 | A1 | 11 November 2021 | WO | 2020213964 | A1 | 22 October 2020 |
| | | | | IN | 201941015348 | A | 23 October 2020 |
| WO | 2022033456 | A1 | 17 February 2022 | CN | 114079493 | A | 22 February 2022 |
| WO | 2022208673 | A1 | 06 October 2022 | JPWO | 2022208673 | A1 | 06 October 2022 |
| WO | 2023274926 | A1 | 05 January 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310069113